# EUROPÄISCHE PATENTSCHRIFT

(11) **EP 3 047 429 B1**
(45) Veröffentlichungstag und Bekanntmachung des Hinweises auf die Patenterteilung: **30.10.2019**
(21) Anmeldenummer: 14771274.9
(22) Anmeldetag: 17.09.2014
(51) Int. Cl.: G06K 19/06, G07D 7/06, G07D 7/12, G07D 7/2033, B32B 27/08, B32B 27/20, B32B 27/28, B32B 27/30, B32B 27/36, B32B 27/40, B41M 3/14, B42D 25/378, B42D 25/455, B42D 25/46

(54) **MANIPULATIONSABGESICHERTES WERT- ODER SICHERHEITSPRODUKT UND VERFAHREN ZUM VERIFIZIEREN DER ECHTHEIT DES MANIPULATIONSABGESICHERTEN WERT- ODER SICHERHEITSPRODUKTES**
MANIPULATION-SAFE VALUABLE OR SECURITY PRODUCT AND METHOD FOR VERIFYING THE AUTHENTICITY OF THE MANIPULATION-SAFE VALUABLE OR SECURITY PRODUCT
PRODUIT DE VALEUR OU DE SÉCURITÉ PROTÉGÉ CONTRE DES MANIPULATIONS FRAUDULEUSES ET PROCÉDÉ POUR VÉRIFIER L'AUTHENTICITÉ DE CE PRODUIT DE VALEUR OU DE SÉCURITÉ PROTÉGÉ CONTRE DES MANIPULATIONS FRAUDULEUSES

(30) Priorität: 18.09.2013 DE 102013218754
(43) Veröffentlichungstag der Anmeldung: 27.07.2016
(73) Patentinhaber: Bundesdruckerei GmbH, 10969 Berlin (DE)
(72) Erfinder: PEINZE, Franziska, 12589 Berlin (DE); KULIKOVSKA, Olga, 14165 Berlin (DE)
(74) Vertreter: Patentanwälte Bressel und Partner mbB
(86) Internationale Anmeldenummer: PCT/EP2014/069786
(87) Internationale Veröffentlichungsnummer: WO 2015/040054

(56) Entgegenhaltungen:
- DE-A1- 19 838 893
- DE-A1-102005 052 071
- DE-A1-102011 005 518

## Beschreibung

Die vorliegende Erfindung betrifft Wert- oder Sicherheitsprodukte, insbesondere Wert- oder Sicherheitsdokumente, die gegen Manipulation abgesichert sind, sowie ein Verfahren zum Verifizieren der Echtheit eines derartigen Wert- oder Sicherheitsproduktes. Manipulationsabgesicherte Wert- oder Sicherheitsdokumente können beispielsweise ein Personaldokument, eine Scheckkarte, ein nicht personalisierter Berechtigungsausweis, wie eine Fahrkarte, ein Zahlungsmittel, oder ein für die Produktsicherung bestimmtes Wert- oder Sicherheitselement, sein.

Wert- oder Sicherheitsprodukte, insbesondere Wert- oder Sicherheitsdokumente, dienen dazu, die Identität einer Person oder Sache oder einen Anspruch, beispielsweise auf Zahlung eines Geldbetrages oder auf Herausgabe eines Produktes oder Erbringung einer Dienstleistung, zu verifizieren. Hierzu ist sicherzustellen, dass das Produkt nicht oder nur mit erheblichem Aufwand imitiert, gefälscht oder verfälscht wird. Das Produkt enthält daher Sicherheitsmerkmale, deren Nachahmung äußerst schwierig oder sogar praktisch unmöglich ist. Beispielsweise besteht das Produkt, wie Banknoten, aus einem nicht ohne weiteres verfügbaren Material. Zusätzlich oder alternativ können Sicherheitsmerkmale durch spezielle Farben, beispielsweise lumineszierende oder optisch variable Farben, optische Elemente, wie Hologramme, Kippbilder, Kinegramme, Linsen- oder Prismenarrays, ferner Guillochen, Melierfasern, Sicherheitsfäden und andere gebildet sein.

Zur Identifizierung bzw. Verifizierung der Echtheit von Produkten ist in DE 10 2007 058 601 A1 ein Sicherheitspigment angegeben, das zur Pigmentierung von Farben, Lacken, Pulverlacken, Druckfarben, Beschichtungszusammensetzungen, Kunststoffen, Klebstoffen, Papierrohmassen, Baumaterialien, Gummimassen, Explosivstoffen oder dergleichen verwendet werden kann. Das Sicherheitspigment besteht aus einer transparenten anorganischen Matrix und mindestens einem in die Matrix eingelagerten partikulären Material, welches von der Matrix verschieden ist und unter der Einwirkung von elektromagnetischer Strahlung sichtbares Licht selektiv oder nicht selektiv absorbiert, reflektiert und/oder emittiert. Das partikuläre Material kann beispielsweise ein anorganisches Weiß-, Schwarz- oder Buntpigment, ein anorganisches UV-Pigment, ein anorganisches IR-Upconverter-Pigment, ein verkapselter organischer Farbstoff, ein verkapseltes UV- oder ein IR-Upconverter-Material sein. Das Sicherheitspigment kann insbesondere als Taggant eingesetzt werden. Es kann beispielsweise zur Herstellung einer Druckfarbe verwendet werden.

Ferner ist in DE 10 2011 116 488 A1 ein optisch variables Sicherheitselement mit mikroverkapselter Farbschicht mit einem Motivbereich in Form von Mustern, Zeichen oder einer Codierung beschrieben. Das optisch variable Sicherheitselement zeigt betrachtungswinkelabhängige visuelle Effekte. Hierzu wird eine Druckfarbe bereitgestellt, die in einem Bindemittel eine Vielzahl von Mikrokapseln enthält, die jeweils eine semipermeable Kapselhülle aufweisen. Die Kapselhülle ist für vorbestimmte reaktive Substanzen durchlässig und weist eine eingeschlossene Trägerflüssigkeit und einen durch externe elektrische oder magnetische Felder beeinflussbaren Kapselinhalt auf, welcher in der Mikrokapsel frei beweglich ist. Nach dem Aufbringen der Druckfarbe auf einen Untergrund wird in dem Motivbereich eine Schicht mit den reaktiven Substanzen aufgebracht, welche durch die Kapselhüllen in die Mikrokapseln eindringen. In einem den Motivbereich enthaltenden Teilbereich der Farbschicht wird ein externes elektrisches oder magnetisches Feld angelegt, um dort den beweglichen Kapselinhalt zu beeinflussen. Beispielsweise kann die Ausrichtung oder Position von in den Mikrokapseln enthaltenen nicht-sphärischen Plättchen verändert werden. Die in die Mikrokapseln eingedrungenen reaktiven Substanzen werden ausgehärtet, um den Kapselinhalt in seiner beeinflussten Lage zu fixieren.

Ein Sicherheitsmerkmal für die Absicherung von Wertgegenständen ist in DE 10 2008 049 511 A1 angegeben. Dieses Sicherheitsmerkmal dient zur individuellen Markierung von Sicherheitselementen, indem bei einer Laserbeschriftung eine möglichst vollständige Entfernung von in einem Markierungsstoff enthaltenen Kern/Hülle-Teilchen aus dem Markierungsstoff sichergestellt wird. Hierzu enthält die Hülle des Kern/Hülle-Teilchens einen sublimationsfähigen Bunt- oder Lumineszenzstoff mit einer Sublimationstemperatur von weniger als 220°C. Der Kern der Kern/Hülle-Teilchen kann insbesondere einen Infrarot-Absorber enthalten. Durch Beaufschlagung des Absorbers mit Laserstrahlung werden die Teilchen zerstört.

Es ist bekannt, Wert- oder Sicherheitsdokumente aus Verbundmaterialien, insbesondere aus Polymeren, herzustellen, beispielsweise mit einem Laminationsverfahren aus mehreren Lagen (DE 10 2007 018 450 A1). Zur Verhinderung oder zumindest Erschwerung der Fälschung oder Verfälschung von Wert- oder Sicherheitsdokumenten sind beispielsweise individualisierende, insbesondere personalisierende, Sicherheitsmerkmale in den Wert- oder Sicherheitsprodukten innenliegend angeordnet. Zur Verhinderung der Delamination wird beispielsweise vorgeschlagen, geeignete Materialien für den Verbund auszuwählen, um einen monolithischen Laminationskörper bilden zu können (DE 10 2007 052 947 A1).

Es hat sich herausgestellt, dass eine umfassende Sicherheit gegenüber einer Fälschung oder Verfälschung, zu deren Verwirklichung das Produkt beispielsweise zumindest teilweise gespalten, beispielsweise delaminiert, wird oder an der Außenseite des Produkts mechanische Manipulationen vorgenommen werden, nicht möglich ist. Von daher liegt der vorliegenden Erfindung die Aufgabe zugrunde, ein Wert- oder Sicherheitsprodukt, das eine Manipulation des Produkts dauerhaft visuell anzeigt, sowie ein Verfahren zum Verifizieren der Echtheit eines gegen mechanische Eingriffe abgesicherten Wert- oder Sicherheitsproduktes, zu schaffen. Das Wert- oder Sicherheitsprodukt soll einfach und kostengünstig herstellbar sein.

Soweit in der Beschreibung und in den Ansprüchen der vorliegenden Anmeldung der Begriff ,Wert- oder Sicherheitsprodukt', das insbesondere ein Wert- oder Sicherheitsdokument oder ein Sicherheitselement sein kann, verwendet wird, ist darunter beispielsweise ein Reisepass, Personalausweis, Führerschein, ein Zugangskontrollausweis oder eine andere ID-Karte, ein Fahrzeugschein, Fahrzeugbrief, Visum, Scheck, Zahlungsmittel, insbesondere eine Banknote, eine Scheck-, Bank-, Kredit- oder Barzahlungskarte, Kundenkarte, Gesundheitskarte, Chipkarte, ein Firmenausweis, Berechtigungsnachweis, Mitgliedsausweis, Geschenk- oder Einkaufsgutschein, Frachtbrief oder ein sonstiger Berechtigungsnachweis, Steuerzeichen, Postwertzeichen, Ticket, (Spiel-)Jeton oder ein anderes Dokument zu verstehen. Ein erfindungsgemäßes Produkt kann auch ein Sicherheitselement, beispielsweise ein Aufkleber, Haftetikett (beispielsweise zur Artikelsicherung) oder dergleichen, sein, das das erfindungsgemäße Sicherheitsmerkmal aufweist und das mit einem Vorprodukt eines Wert- oder Sicherheitsdokuments oder eines anderen Artikels, beispielsweise mit einem zu markierenden Produkt, dessen Echtheit zu garantieren ist, unlösbar verbunden werden kann, um das Wert- oder Sicherheitsdokument oder diesen markierten Artikel zu bilden. Dieser Artikel kann beispielsweise ein Exemplar aus einer limitierten Serie gleichartiger Produkte sein, dessen Einzigartigkeit mittels einer Nummerierung oder anderen individuellen Markierung dokumentiert wird. Diese Markierung kann durch die Individualisierung des mit dem Sicherheitsmerkmal versehenen Sicherheitselements realisiert werden. Das Wert- oder Sicherheitsprodukt kann beispielsweise auch eine Smartcard sein. Das Wert- oder Sicherheitsdokument kann im ID 1-, ID 2-, ID 3- oder in irgendeinem anderen normierten oder nicht normierten Format vorliegen, beispielsweise in Heftform, wie bei einem passähnlichen Gegenstand, oder beispielsweise in Kartenform. Ein Wert- oder Sicherheitsprodukt ist im Allgemeinen ein Laminat aus mehreren Produktlagen, die passergenau unter Wärmeeinwirkung und unter erhöhtem Druck flächig miteinander verbunden worden sind. Insbesondere können die Produktlagen Polymerlagen sein. Diese Produkte sollen den normierten Anforderungen genügen, beispielsweise gemäß ISO 10373, ISO/IEC 7810, ISO 14443. Die Produktlagen bestehen beispielsweise aus einem Trägermaterial, das sich für eine Lamination eignet.

Das Wert- oder Sicherheitsprodukt kann aus einem Polymer gebildet sein, das ausgewählt ist aus einer Gruppe, umfassend Polycarbonat (PC), insbesondere Bisphenol A-Polycarbonat, Polyethylenterephthalat (PET), deren Derivate, wie Glykol-modifiziertes PET (PETG), Polyethylennaphthalat (PEN), Polyvinylchlorid (PVC), Polyvinylbutyral (PVB), Polymethylmethacrylat (PMMA), Polyimid (PI), Polyvinylalkohol (PVA), Polystyrol (PS), Polyvinylphenol (PVP), Polypropylen (PP), Polyethylen (PE), thermoplastische Elastomere (TPE), insbesondere thermoplastisches Polyurethan (TPU), Acrylnitril-Butadien-StyrolCopolymer (ABS) sowie deren Derivate, und/oder Papier und/oder Pappe und/oder Glas und/oder Metall und/oder Keramik. Außerdem kann das Produkt auch aus mehreren dieser Materialien hergestellt sein. Bevorzugt besteht es aus PC oder PC/TPU/PC. Die Polymere können entweder gefüllt oder ungefüllt vorliegen. Im letzteren Falle sind sie vorzugsweise transparent oder transluzent. Falls die Polymere gefüllt sind, sind sie opak. Die vorstehenden Angaben beziehen sich sowohl auf miteinander zu verbindende Folien als auch auf Flüssigformulierungen, die auf ein Vorprodukt aufgebracht werden, wie einen Schutz- oder Decklack. Bevorzugt wird das Produkt aus 3 bis 12, vorzugsweise 4 bis 10 Folien, hergestellt. Die Folien können ferner Druckschichten tragen. Ein solcherart gebildetes Laminat kann abschließend ein- oder beidseitig mit dem Schutz- oder Decklack oder mit einer Folie überzogen werden. Die Folie kann insbesondere ein Volumenhologramm, eine Folie mit einem Oberflächenhologramm (beispielsweise einem kinegraphischen Element) oder eine Kratzschutzfolie sein. Derart gebildete Overlaylagen schützen ein darunter angeordnetes Sicherheitsmerkmal und/oder verleihen dem Dokument die erforderliche Abriebfestigkeit.

Soweit in der Beschreibung und in den Ansprüchen ein Begriff im Singular genannt wird, beispielsweise ,erste chemische Substanz', 'zweite chemische Substanz' usw., ist der Begriff im jeweiligen Kontext gleichzeitig auch im Plural gemeint, also beispielsweise ,erste chemische Substanzen', 'zweite chemische Substanzen' usw., sofern nicht ausdrücklich etwas anderes angegeben ist. Entsprechendes gilt auch im umgekehrten Falle.

Gemäß der vorliegenden Erfindung wird die vorstehend angegebene Aufgabe durch das manipulationsabgesicherte Wert- oder Sicherheitsprodukt und das Verfahren zum Verifizieren der Echtheit eines manipulationsabgesicherten Wert- oder Sicherheitsproduktes gemäß den unabhängigen Ansprüchen gelöst. Bevorzugte Ausführungsformen der Erfindung sind in den Unteransprüchen angegeben.

Das erfindungsgemäße Wert- oder Sicherheitsprodukt enthält Kern/Hülle-Teilchen, d.h. Mikrokapseln. Die Kern/Hülle-Teilchen enthalten mindestens eine erste chemische Substanz. Unter einer chemischen Substanz sind in der vorliegenden Anmeldung sowohl ein einheitlicher chemischer Stoff (chemische Verbindung) als auch eine Mischung mehrerer chemischer Stoffe zu verstehen. Diese erste chemische Substanz kann sich entweder im Kern oder in der Hülle oder sowohl im Kern als auch in der Hülle befinden. Die Hülle der Kern/Hülle-Teilchen ist dazu ausgebildet, durch mechanische Einwirkung beschädigt oder zerstört werden zu können. Dadurch wird die erste chemische Substanz aus den Kern/Hülle-Teilchen freigesetzt. Daraufhin ruft die freigesetzte erste chemische Substanz entweder allein einen optisch wahrnehmbaren Eindruck hervor, oder ein optisch wahrnehmbarer Eindruck wird infolge oder aufgrund einer chemischen Wechselwirkung dieser freigesetzten ersten chemischen Substanz mit mindestens einer sich in der Umgebung der Kern/Hülle-Teilchen befindenden zweiten chemischen Substanz hervorgerufen. Die zweite chemische Substanz befindet sich in einem an das freisetzende Kern/Hülle-Teilchen unmittelbar benachbarten Volumenbereich in dem Wert- oder Sicherheitsprodukt (in der 'Umgebung' des Kern/Hülle-Teilchens), wohin die erste chemische Substanz bei der Freisetzung gelangen kann. Der die zweite chemische Substanz enthaltende Volumenbereich kann beispielsweise mit dem Volumenbereich, in dem sich die Kern/Hülle-Teilchen befinden, in direktem Kontakt zueinander stehen, d.h. einander berühren.

Der durch die mechanische Einwirkung hervorgerufene optisch wahrnehmbare Eindruck zeigt einer Person oder einer Verifikationsvorrichtung unmittelbar an, dass das betreffende Wert- oder Sicherheitsprodukt manipuliert worden ist, beispielsweise durch Spalten des Wert- oder Sicherheitsprodukts in die Produktlagen oder durch einen mechanischen Eingriff an der Oberfläche des Wert- oder Sicherheitsproduktes. Denn beim Spalten, beispielsweise Delaminieren, des Produktes oder bei dem mechanischen Eingriff an der Oberfläche des Produktes werden im Bereich des Eingriffes mechanische Spannungen und/oder Verformungen im Material des Wert- oder Sicherheitsproduktes erzeugt. Diese mechanischen Spannungen und/oder Verformungen führen zu einer Beschädigung oder sogar zur vollständigen Zerstörung der in diesem Bereich liegenden Kern/Hülle-Teilchen, sodass die erste chemische Substanz freigesetzt wird.

Der Erfindung liegt die Erkenntnis zugrunde, dass das Wert- oder Sicherheitsprodukt bei einem manipulativen Eingriff im Allgemeinen mechanisch beansprucht wird und dass diese mechanische Beanspruchung/Belastung zu einer Beschädigung und/oder Zerstörung der Kern/Hülle-Teilchen führt. Beispielsweise kann die Hülle bersten oder platzen, sodass die erste chemische Substanz freigesetzt wird. Da daraufhin die aus den Teilchen ausgetretenen ersten chemischen Substanzen entweder direkt oder durch chemische Wechselwirkung mit anderen (zweiten) chemischen Substanzen einen optisch wahrnehmbaren Effekt hervorrufen, wird ein derartiger manipulativer Eingriff in das Produkt nachträglich erkennbar. Somit wird dokumentiert, dass das Produkt manipuliert und damit verfälscht worden ist.

Somit wird die der Erfindung zugrunde liegende Aufgabe ferner durch das Verfahren zum Verifizieren der Echtheit des manipulationsabgesicherten Wert- oder Sicherheitsproduktes gelöst. Dieses Verfahren umfasst folgende Verfahrensschritte, wenn die Verifikation von einer verifizierenden Person durchgeführt wird:
(a') Bereitstellen des manipulationsabgesicherten Wert- oder Sicherheitsproduktes;
(b') Betrachten des manipulationsabgesicherten Wert- oder Sicherheitsproduktes durch eine Person; und
(c') Erfassen einer Abweichung der optischen Eigenschaften einer Oberfläche oder eines Bereiches der Oberfläche des manipulationsabgesicherten Wert- oder Sicherheitsproduktes von Referenzeigenschaften der Oberfläche oder des Bereiches der Oberfläche durch die Person, wobei eine Abweichung indiziert, dass das manipulationsabgesicherte Wert- oder Sicherheitsprodukt manipuliert ist. Hierzu ist die Veränderung der optischen Eigenschaften mit dem menschlichen Auge erkennbar. Die Referenzeigenschaften sind optische Eigenschaften der Oberfläche oder des Bereiches der Oberfläche eines nicht manipulierten Wert- oder Sicherheitsproduktes.

Für die Verifizierung kann auch eine dazu eingerichtete Verifikationseinrichtung eingesetzt werden. In diesem Falle umfasst das Verifikationsverfahren die folgenden Verfahrensschritte:
(a) Bereitstellen der Verifikationsvorrichtung, die dazu ausgebildet ist, elektromagnetische Strahlung zu detektieren, sowie Bereitstellen des manipulationsabgesicherten Wert- oder Sicherheitsproduktes;
(b) Platzieren des manipulationsabgesicherten Wert- oder Sicherheitsproduktes in der Verifikationsvorrichtung; und
(c) Erfassen einer Abweichung der optischen Eigenschaften einer Oberfläche oder eines Bereiches der Oberfläche des manipulationsabgesicherten Wert- oder Sicherheitsproduktes von Referenzeigenschaften der Oberfläche oder des Bereiches der Oberfläche, wobei eine Abweichung indiziert, dass das manipulationsabgesicherte Wert- oder Sicherheitsprodukt manipuliert ist. Die Referenzeigenschaften sind optische Eigenschaften eines nicht manipulierten Wert- oder Sicherheitsproduktes.

Der optisch wahrnehmbare Effekt kann insbesondere darin bestehen, dass sich das Produktmaterial verfärbt, wobei die Verfärbung zu einer (veränderten) Lichtabsorption vorzugsweise im sichtbaren Spektralbereich führt. Unter einer Verfärbung sind eine Änderung der Farbtönung und/oder eine Änderung der Farbhelligkeit der gesamten Oberfläche des Wert- oder Sicherheitsproduktes oder nur eines Bereiches davon zu verstehen, wobei sowohl die Bildung einer Farbe auf einer vormals ungefärbten Oberfläche und die Entfärbung einer vormals gefärbten Oberfläche mit eingeschlossen sind. Für die Ermittlung der Manipulation des Wert- oder Sicherheitsproduktes kann auch eine Lichtabsorption in einem anderen Spektralbereich als dem sichtbaren Spektralbereich genutzt werden, beispielsweise eine Lichtabsorption im Infrarot- (IR) und/oder Ultraviolett- (UV) Spektralbereich. Alternativ oder zusätzlich kann die Verfärbung aufgrund der Freisetzung der ersten chemischen Substanz durch eine Lumineszenz (Fluoreszenz, Phosphoreszenz) hervorgerufen sein, nämlich im sichtbaren Spektralbereich oder im Falle einer Detektion der Freisetzung der ersten chemischen Substanz mittels der Verifikationsvorrichtung auch in einem anderen Spektralbereich als dem sichtbaren Spektralbereich, beispielsweise im IR- und/oder UV-Spektralbereich. Somit ist die Verifikationsvorrichtung dazu auszubilden, dass sie die elektromagnetische Strahlung in einem Spektralbereich detektieren kann, in dem die Strahlungsabsorption oder Lumineszenz aufgrund der Freisetzung der ersten chemischen Substanz aus den Kern/Hülle-Teilchen stattfindet. Für die Erfassung von Lumineszenzstrahlung weist die Verifikationsvorrichtung eine Strahlungsquelle für die Lumineszenzanregung auf, beispielsweise eine UV-Lichtquelle. Für die Erfassung einer Verfärbung aufgrund von Strahlungsabsorption kann die Verifikationsvorrichtung ebenfalls eine Beleuchtungsquelle aufweisen. Falls die Manipulation von einer Person festgestellt werden soll, ist eine Verfärbung durch Absorption und/oder Lumineszenz im sichtbaren Spektralbereich vorzusehen. Für die Darstellung der Lumineszenz bedient sich eine verifizierende Person einer separaten Strahlungsquelle für die Lumineszenzanregung.

Die Verfärbung kann sich auf einen kleinen Teilbereich oder auf das gesamte Produkt und auf eine oder beide Oberflächen des Produktes erstrecken. Vorzugsweise wird der optisch wahrnehmbare Eindruck ausschließlich in dem Oberflächenbereich des Produktes erzeugt, in dem die Kern/Hülle-Teilchen durch die mechanische Beeinflussung beschädigt oder zerstört werden. Alternativ kann aber auch eine Fernwirkung vorliegen, die durch eine Diffusion oder einen anderen Transport von chemischen Substanzen im Produkt verursacht wird. Ferner kann die Fernwirkung auch durch einen Wärmeeintrag nach der mechanischen Manipulation bewirkt werden. Beispielsweise kann die freigesetzte erste chemische Substanz innerhalb des Produktes diffundieren oder sich auf andere Art und Weise fortbewegen, beispielsweise in eigens hierfür vorgesehenen Hohlräumen, insbesondere Kanälen, beispielsweise in Glasfaserkanälen oder in einer porösen Schicht.

In einer bevorzugten Weiterbildung der vorliegenden Erfindung können die Kern/Hülle-Teilchen in einer vorgegebenen räumlichen Anordnung verteilt vorliegen und durch die mechanische Beanspruchung die erste chemische Substanz freisetzen, sodass diese Anordnung in Form eines Musters erscheint. Beispielsweise kann diese Anordnung in Form von alphanumerischen Zeichen gebildet sein, etwa in dem Schriftzug "MANIPULIERT" oder "FÄLSCHUNG" oder dergleichen, oder es werden Symbole, etwa ein großes "X", oder andere Muster sichtbar, die individualisierende Information auf dem Produkt oder die Denomination auf Banknoten unleserlich machen oder durchstreichen. Oder es erscheint eine individualisierte Information, beispielsweise der Name des Inhabers des Wert- oder Sicherheitsproduktes, sodass der Versuch einer Fälschung durch die erneute Wiedergabe der ursprünglichen Information zunichte gemacht wird.

Durch die mechanische Beeinflussung des Produktmaterials wird ein normalerweise in Form eines Musters ausgebildetes Sicherheitsmerkmal verändert, beispielsweise durch Verlaufen der Musterstrukturen, sodass ein vor der Manipulation gut lesbarer Text dann nicht mehr oder nur noch schlecht lesbar wird. Hierzu befinden sich die Kern/Hülle-Teilchen im Bereich des Sicherheitsmerkmals. In diesem Falle überlappt das Sicherheitsmerkmal mit einem von den Kern/Hülle-Teilchen gebildeten Muster oder einem Flächenbereich, in dem die Teilchen angeordnet sind.

Oder ein in Form eines Musters ausgebildetes Sicherheitsmerkmal wird von einer Verfärbung des Produktmaterials in dem Bereich, in dem sich das Muster befindet, überlagert, sodass auch in diesem Falle die Merkmalsstrukturen nicht mehr gut oder überhaupt nicht mehr erkennbar sind. Oder der Farbstoff der Musterstrukturen reagiert mit der ersten chemischen Substanz, sodass er entfärbt oder eine andere Farbe gebildet wird. Beispielsweise kann ein Muster mit unterschiedlich gefärbten Musterstrukturen, etwa ein Schachbrettmuster, unter Erhalt der Musterstruktur in ein Muster mit anderen Farben umgewandelt werden, beispielsweise ein rot/grünes Muster in ein gelb/blaues Muster. In diesem Falle werden die die ursprüngliche Musterstruktur bildenden Farbstoffe oder Pigmente mit der aus den Kern/Hülle-Teilchen freigesetzten ersten chemischen Substanz beispielsweise chemisch umgesetzt, sodass sich Farbänderungen ergeben.

Demzufolge ist die Verifikationsvorrichtung nach Maßgabe der vorgesehenen Ausführungsform des erfindungsgemäßen Wert- oder Sicherheitsproduktes dazu auszubilden, eine Verfärbung des Produktes gegebenenfalls ausschließlich in einem vorgegebenen Oberflächenbereich ortsaufgelöst zu erfassen oder gegebenenfalls die gesamte Oberfläche des Produktes abzutasten, um eine Veränderung der spektralen Eigenschaften zu erfassen. Gegebenenfalls ist die Verifikationsvorrichtung mit einer Auswertesoftware ausgestattet, mit der ein ortsaufgelöst aufgenommenes Bild der Oberfläche des Produktes mit einem von einem nicht manipulierten Produkt stammenden Referenzbild verglichen wird. Aufgrund typischer Veränderungen, die auf eine zu einer Freisetzung der ersten chemischen Substanz führende Manipulation des Produktes zurückgeführt werden können, kann ermittelt werden, ob eine Manipulation des Produktes stattgefunden hat.

Die mechanische Beeinflussung der Kern/Hülle-Teilchen kann beispielsweise durch einen manipulativen Eingriff mit Werkzeugen insbesondere an der Oberfläche des Wert- oder Sicherheitsproduktes stattfinden. Auch durch eine Delamination (Spaltung), d.h. ein Auseinanderziehen von miteinander verbundenen Produktlagen, werden mechanische Spannungen im Produktmaterial erzeugt, die zu der Beschädigung oder Zerstörung der Kern/Hülle-Teilchen führen. Zur Herstellung derartiger Teilchen wird der flüssige Farbstoff oder die Tinte beispielsweise in einer Flüssigkeit, in der sie unlöslich ist, dispergiert, sodass sich kleinste Tröpfchen bilden, oder es werden feste Partikel in einer Flüssigkeit dispergiert, sodass sich eine Suspension bildet. Diese Tröpfchen bzw. Feststoff-Partikel können beispielsweise mittels geeigneter Netzmittel oder Emulgatoren stabilisiert werden. Ein Verfahren zur Herstellung von mit einer Hülle überzogenen Partikeln zur Bildung von Kern/Hülle-Teilchen beispielsweise mit Farbmitteln ist in EP 0 505 648 A1 angegeben, dessen Offenbarungsgehalt vollumfänglich in die vorliegende Anmeldung aufgenommen wird. Danach wird ein hydrophobes Material mit einem Harz ummantelt, indem zunächst eine organische Phase, die durch eine Mischung eines oder mehrerer hydrophober Flüssigkeiten und/oder von hydrophoben Feststoffen mit einem sich selbst dispergierenden Harz gebildet ist, bereitgestellt wird und indem dieser Mischung dann eine wässrige Phase zugegeben wird, sodass das Harz darin eine Dispersion mit Teilchengrößen von bis zu 0,1 µm bildet und die hydrophobe Flüssigkeit und/oder den hydrophoben Feststoff ummantelt. Falls ein Feststoff ummantelt werden soll, wird dieser zunächst in die gewünschte Teilchengröße überführt, beispielsweise durch Vermahlen. In einem Beispiel wird ein fester Farbstoff (Cyaninblau) mit einem Harz (Polyurethanharz mit terminalen Isocyanatgruppen) in einer hydrophoben Flüssigkeit (Methylethylketon) dispergiert. Eine wässrige Lösung eines Amins wird dann mit dieser Dispersion vermischt und erhitzt. Durch Entfernen der hydrophoben Flüssigkeit entsteht eine wässrige Dispersion von ummantelten Farbpartikeln. Ein Verfahren zur Verkapselung mit TiO₂ ist in der Dissertation von Holger Strohm aus Würzburg, "Flüssigphasenabscheidung von Titandioxid auf Polymerlatex-Templaten", Bayerische Julius-Maximilians-Universität Würzburg, 2005 beschrieben. Der Offenbarungsgehalt dieser Druckschrift wird hiermit vollumfänglich in die vorliegende Anmeldung aufgenommen. Nach dieser Druckschrift werden Latexpartikel zunächst mit Polyelektrolyten funktionalisiert. Anschließend werden darauf TiO₂-Partikel abgeschieden, indem die Latexpartikel mit einer Lösung von (NH₄)₂[TiF₆] und H₃BO₃/HCl in Kontakt gebracht werden. Zur Erzeugung von rein anorganischen Hohlkugeln werden die Latexpartikel anschließend entfernt, entweder durch Kalzinierung der TiO₂-Schichten an Luftatmosphäre oder auf chemischem Wege durch Auflösen des Templatkerns mit Toluol. Auf diese Weise werden sogenannte Nano-Container erzeugt, die für etliche Anwendungen bereits beschrieben sind, beispielsweise für Transporter medizinischer Wirkstoffe, für Selbstheilungsprozesse von Werkstoffen und dergleichen. Weitere Verfahren zur Herstellung von Kern/Hülle-Teilchen werden auch von Skirtach et al., "Laser-Induced Release of Encapsulated Materials Inside Living Cells", Angew. Chem. Int. Ed., 2006, 45, 4612-4617 und Angelatos et al., "Light-Responsive Polyelectrolyte/Gold Nanoparticle Microcapsules", J. Phys. Chem. B, 2005, 109, 3071-3076 angegeben. Auch diese Druckschriften werden durch Bezugnahme vollumfänglich in die vorliegende Anmeldung aufgenommen.

Alternativ können auch poröse Partikel mit einem flüssigen Farbstoff oder mit einer flüssigen Tinte (Farbstoff in einem Bindemittel) beladen (getränkt) werden, indem der flüssige Farbstoff oder die Tinte oder ein geschmolzenes Farbmittel in die Poren dieser Partikel aufgenommen wird. Oder poröse oder nicht poröse Partikel können mit dem flüssigen Farbstoff oder der Tinte oder geschmolzenen Farbmittel beschichtet werden. Die Partikel werden dann mit der Hülle umhüllt. Als pörose Partikel kommen anorganische Materialien wie beispielsweise Zeolithe oder organische Materialien, wie beispielsweise Mikroschäume auf Polyurethanbasis, oder poröse Nanopartikel oder anorganische Mikro-Container in Frage. Ferner sind auch poröse Materialien durch Spray-Pyrolyse herstellbar. Hierzu wird auf M. Hampden-Smith, T. Kodas, S. Haubrich, M. Oljaca, R. Einhorn, D. Williams, "Novel Particulate Production Processes to Create Unique Security Materials", in: Proc. SPIE 6075, Optical Security and Counterfeit Deterrence Techniques VI, 60750K (February 09, 2006); doi:10.1117/12.641883 verwiesen. Daher wird der Offenbarungsgehalt dieser Veröffentlichung vollumfänglich, jedenfalls bezüglich der dort beschriebenen Herstellmethode, in die vorliegende Anmeldung aufgenommen.

Weitere Herstellverfahren für Kern/Hülle-Teilchen (u.a. Hohlglas-Partikel) sind in D.G. Shchukin, H. Möhwald, "Self-Repairing Coatings Containing Active Nanoreservoirs", in: www.small-journal.com (small), 2007, 3, Nr. 6, 926-943, Wiley-VCH Verlag, Weinheim angegeben. Daher wird der Offenbarungsgehalt dieser Veröffentlichung vollumfänglich, jedenfalls bezüglich der dort beschriebenen Herstellmethoden, in die vorliegende Anmeldung aufgenommen.

Demnach werden die Kern/Hülle-Teilchen des Wert- oder Sicherheitsproduktes zu deren Herstellung beispielsweise durch ein in den Kern aufzunehmendes Farbmittel tröpfchenförmig (flüssiger Farbstoff, Tinte) vorgelegt und mit einem Hüllmaterial umhüllt, beispielsweise mit TiO₂ oder mit Metall, beispielsweise AI, oder mit einem Polymer, beispielsweise mit einem Acrylat. Alternativ können auch poröse Partikel mit einem flüssigen Farbstoff oder mit einer Tinte beladen (getränkt) werden, indem der flüssige Farbstoff oder die Tinte in die Poren dieser Partikel aufgenommen wird, und die porösen Partikel werden anschließend mit dem Hüllmaterial umhüllt. Oder poröse oder nicht poröse Partikel können mit dem flüssigen Farbstoff oder der Tinte beschichtet und mit dem Hüllmaterial umhüllt werden. Die Partikel bilden die Kern/Hülle-Teilchen. Der Farbstoff oder die Tinte verbleibt in den Kern/Hülle-Teilchen entweder flüssig oder erstarrt im Kern.

Nach einer mechanischen Einwirkung auf die Teilchen wirkt gegebenenfalls entstehende Wärme diffusionsbegünstigend. Der Farbstoff diffundiert durch eine poröse Hülle in die Umgebung der Kern/Hülle-Teilchen.

Die Kern/Hülle-Teilchen sind in das manipulationsabgesicherte Wert- oder Sicherheitsprodukt in einer vorzugsweise flächigen (zweidimensionalen) Anordnung eingebracht. Beispielsweise können sie auf die Oberfläche des Produktes aufgebracht sein. Alternativ oder zusätzlich können sie sich unter einer Schutzlackschicht des Produktes befinden, vorzugsweise unmittelbar unterhalb der Schutzlackschicht und an diese angrenzend, und dort flächig verteilt vorliegen. Falls das Wert- oder Sicherheitsprodukt durch Lamination von mindestens zwei zu einem Stapel zusammengetragenen Produktlagen gebildet ist, können sich die Kern/Hülle-Teilchen alternativ oder zusätzlich in mindestens einer Kontaktebene zwischen zwei aneinander angrenzenden Produktlagen befinden. Vorzugsweise sind die Kern/Hülle-Teilchen innenliegend im Produkt angeordnet, sodass sie zumindest nicht mechanisch entfernt werden können, ohne das Produkt aufzuspalten. Wenn die Kern/Hülle-Teilchen auf die Oberfläche eines weitgehend fertig gestellten Wert- oder Sicherheitsproduktes aufgebracht werden, kann dieses anschließend mit einem Schutzlack überzogen werden, sodass die Teilchen gegen Fälschung oder Verfälschung geschützt sind.

Nochmals alternativ oder zusätzlich können sich die Kern/Hülle-Teilchen auch innerhalb mindestens einer Produktlage befinden. In noch einer anderen Ausführungsform können die Kern/Hülle-Teilchen in Kavitäten innerhalb des Wert- oder Sicherheitsproduktes enthalten sein. Diese Kavitäten können Poren, Kanäle, Löcher, Vertiefungen, Ausnehmungen oder dergleichen sein. Die Kavitäten können in einem Produktmaterial durch Laserbestrahlung, etwa mit UV-Strahlung, die das Produktmaterial, etwa ein Polymer, zersetzt, erzeugt werden. Hierfür geeignete Laser sind beispielsweise Excimerlaser. Alternativ können auch IR-Laser, z.B. CO₂-Laser verwendet werden. Die Kanäle durchdringen eine Produktlage vorzugsweise vollständig oder nur teilweise. Die Kavitäten können in einem regelmäßigen Raster innerhalb eines Teilbereiches des Produktes oder über das gesamte Produkt verteilt oder in einer eine Information darstellenden Anordnung, beispielsweise eines Wappens oder anderen Symbols, angeordnet sein. Die Kern/Hülle-Teilchen können in noch einer weiteren bevorzugten Weiterbildung der vorliegenden Erfindung als disperse Phase in einem Dispergiermittel enthalten sein, sodass das Dispergiermittel und die Kern/Hülle-Teilchen zusammen eine Dispersion bilden, die ein Dotiermittel bildet. Das Dispergiermittel kann beispielsweise durch ein Bindemittel gebildet sein. Das Dotiermittel kann dann auf das Wert- oder Sicherheitsprodukt oder eine Produktlage, die zur Lamination zur Bildung des Wert- oder Sicherheitsproduktes vorgesehen ist, aufgebracht bzw. in das Wert- oder Sicherheitsprodukt eingebracht werden. Zur Aufbringung auf das Wert- oder Sicherheitsprodukt oder die Produktlage ist das Dotiermittel flüssig oder pastös. Vorzugsweise sind die Materialien des Dispergiermittels für die Kern/Hülle-Teilchen und des Wert- oder Sicherheitsproduktes oder der Produktlage chemisch miteinander kompatibel. Das bedeutet, dass sie chemisch ähnlich oder identisch sind. Dadurch wird eine Delamination des Wert- oder Sicherheitsproduktes auch im Bereich der Kern/Hülle-Teilchen verhindert. Vorzugsweise sind die Bindemittel einer Dispersion, die die Kern/Hülle-Teilchen enthält, und das Produktmaterial der Produktlage, auf oder in die die Teilchen auf- bzw. eingebracht sind, sowie vorzugsweise auch das Produktmaterial von an dieser Produktlage anliegenden weiteren Produktlagen chemisch/stofflich miteinander identisch oder zueinander ähnlich. Besonders bevorzugt ist das Wert- oder Sicherheitsprodukt oder zumindest sind die vorgenannten Produktlagen aus einem Produktmaterial gebildet, das mindestens teilweise aus PC besteht oder dieses enthält, und die Dispersion enthält vorzugsweise ein PC-Bindemittel. Weiter bevorzugt ist das Wert- oder Sicherheitsprodukt aus mindestens zwei Produktlagen gebildet, von denen mindestens eine aus PC besteht oder PC enthält, und die Kern/Hülle-Teilchen sind aus einer PC als Bindemittel enthaltenden Dispersion auf oder in diese mindestens eine PC-Produktlage auf- oder eingebracht.

Beispielsweise können die Kern/Hülle-Teilchen in noch einer weiteren bevorzugten Weiterbildung der vorliegenden Erfindung als disperse Phase in einem Dispergiermittel für ein Druckmittel enthalten sein, sodass ein Druckmittel gebildet wird. Das Druckmittel kann insbesondere eine Druckfarbe sein. Das Dispergiermittel kann beispielsweise durch ein Bindemittel gebildet sein. Das Druckmittel kann die für dessen Anwendung erforderlichen rheologischen Eigenschaften aufweisen. Das Druckmittel kann dann auf das Wert- oder Sicherheitsprodukt und/oder auf mindestens eine Produktlage gedruckt werden. Das Dispergiermittel kann jedes beliebige Bindemittel sein, das die Kern/Hülle-Teilchen ohne Veränderung aufnimmt und in dem die Teilchen dispergierbar und stabil sind. Als Dispergiermittel kann jedes Druckmittel-Bindemittel verwendet werden, das für einen drucktechnischen Prozess geeignet ist, insbesondere für ein Flachdruckverfahren, ganz besonders für ein Offsetdruckverfahren, oder für ein Tiefdruck- oder Non-Impact-Druckverfahren, wie zum Beispiel ein Tintenstrahldruckverfahren (InkJet), oder ein Durchdruckverfahren, ganz besonders ein Siebdruckverfahren. Für ein Tintenstrahldruckverfahren sind entsprechende Zusammensetzungen für Druckmittel in DE 10 2007 052 947 A1 angegeben. Zumindest insoweit wird der Offenbarungsgehalt dieser Druckschrift durch Bezugnahme in die vorliegende Anmeldung aufgenommen. Geeignete Bindemittel für andere Druckverfahren sind ebenfalls allgemein bekannt.

Das Dotiermittel, vorzugsweise Druckmittel, wird besonders bevorzugt in einer zweidimensionalen Verteilung auf eine Produktlage oder das Produkt vollflächig oder in einer strukturierten/gemusterten Anordnung aufgebracht. Falls ein digitales Druckverfahren, wie das Tintenstrahldruckverfahren, eingesetzt wird, kann das die Kern/Hülle-Teilchen enthaltende Druckmittel in individualisierter Form aufgetragen werden. Somit kann eine individualisierte Verfärbung des Wert- oder Sicherheitsproduktes generiert werden, wenn das Produkt manipuliert und dabei mechanisch beansprucht wird. Als Beschichtungsverfahren kommen auch andere Verfahren als Druckverfahren in Betracht, beispielsweise Aufrakeln, Vorhanggießen, Roller-Coaten, Spray-Coating, Dispensen, Spritzen und Imprägnieren. Falls das Dotiermittel in einer strukturierten Anordnung aufgebracht wird, können die Kern/Hülle-Teilchen oder eine Teilchen-Dispersion pixeliert, d.h. in einem Raster, auf eine Produktlage aufgetragen werden. Das Raster kann mehrere Arten von Kern/Hülle-Teilchen enthalten, beispielsweise Teilchen mit jeweils unterschiedlichen Farbmitteln, sodass unterschiedliche Farben erzeugt werden können, etwa mit Farbmitteln in Grundfarben etwa des CMYK-Farbraumes, einschließlich einer Schwarz- und gegebenenfalls auch einer Graukomponente.

Die Kern/Hülle-Teilchen können auch in die Produktlagen eingebracht werden, beispielsweise bereits bei der Herstellung der Produktlagen. Zur Einbettung der Kern/Hülle-Teilchen in das Produktmaterial kann dieses aus einem Vorprodukt zusammen mit den Kern/Hülle-Teilchen, die vorzugsweise in einem hierfür geeigneten Material dispergiert sind, extrudiert werden, sodass beispielsweise Folien, die die Teilchen enthalten, gebildet werden.

Die Kern/Hülle-Teilchen können beispielsweise vor dem Laminieren auf die Produktlagen auf- oder in diese eingebracht werden. Falls die Produktlagen aus PC oder PET bestehen oder mindestens eines dieser Polymere enthalten, kann eine Zubereitung für das Kern/Hülle-Teilchen-Druckmittel verwendet werden, das auf der Basis eines PC-Derivats hergestellt ist, wobei ganz besonders bevorzugt das in DE 10 2007 052 947 A1 angegebene PC-Derivat verwendbar ist (geminal disubstituiertes Dihydroxydiphenylcycloalkan). Der Offenbarungsgehalt dieses Dokuments wird daher unter Bezugnahme vollumfänglich, zumindest in Bezug auf die Zusammensetzung der PC-Derivate, in die vorliegende Anmeldung aufgenommen.

In einer bevorzugten Weiterbildung der vorliegenden Erfindung befindet sich die mindestens eine erste chemische Substanz in einem von einer Hülle umgebenen Kern der Kern/Hülle-Teilchen. Grundsätzlich kann die erste chemische Substanz aber auch Bestandteil der Hülle sein oder sich sowohl im Kern befinden als auch zusätzlich Bestandteil der Hülle sein.

Die Kern/Hülle-Teilchen haben vorzugsweise eine Größe im Nanometer- oder Mikrometerbereich oder Sub-Mikrometerbereich, d.h. im Falle eines im Wesentlichen kugel- oder kubus- oder quaderförmigen Teilchens liegt dessen Durchmesser bzw. Hauptdiagonale im Mikrometerbereich oder darunter, vorzugsweise im Bereich von 0,01 bis 500 µm, weiter bevorzugt von 0,1 bis 100 µm und am meisten bevorzugt von 0,5 bis 50 µm. Die Kern/Hülle-Teilchen können allerdings auch Plättchen- oder Nadelform haben. Auch in diesem Falle liegt deren Dicke bzw. Nadeldurchmesser im Mikrometerbereich oder darunter, vorzugsweise im Bereich von 0,005 bis 500 µm, weiter bevorzugt von 0,1 bis 100 µm und am meisten bevorzugt von 0,5 bis 50 µm. Die Größendimension in Längserstreckung, d.h. parallel zur Plättchenebene oder Nadellänge, beträgt vorzugsweise von 0,5 bis 500 µm, vorzugsweise von 1 bis 100 µm und ganz besonders bevorzugt von 5 bis 50 µm.

In einer weiteren bevorzugten Weiterbildung der vorliegenden Erfindung (erste Ausführungsvariante) ist mindestens eine der ersten chemischen Substanzen durch jeweils ein Farbmittel gebildet. Das mindestens eine Farbmittel ruft aufgrund der mechanischen Einwirkung auf das erfindungsgemäße Wert- oder Sicherheitsprodukt bereits allein den optisch wahrnehmbaren Eindruck hervor. Insbesondere können die Kern/Hülle-Teilchen einen flüssigen Farbstoff oder eine (flüssige) Tinte (Farbstoffzubereitung) enthalten. Diese chemische Substanz diffundiert bei der Schädigung oder Zerstörung der Kern/Hülle-Teilchen in das umgebende Material des Produktes und färbt dieses dadurch ein. Während das Farbstoff- bzw. Tintenmaterial in diesem Falle vor dem Austreten aus den Kern/Hülle-Teilchen zunächst optisch nicht wahrnehmbar ist oder höchstens eine kaum wahrnehmbare gleichmäßige Verfärbung des Produktmaterials hervorruft, wird durch das Eindiffundieren der ersten chemischen Substanz in das Produktmaterial eine visuell leicht wahrnehmbare lokale Verfärbung erreicht, die vom menschlichen Auge erkennbar ist, insbesondere weil sie einen optischen Kontrast zum umgebenden Material bildet. Alternativ kann diese Verfärbung auch von einer Verifikationsvorrichtung erfasst werden. Durch das Austreten der ersten chemischen Substanz bilden sich lokal farbige Flecken im Produktmaterial. Gegebenenfalls handelt es sich um im IR- und/oder UV-Spektralbereich detektierbare lokale Verfärbungen.

Als flüssiger Farbstoff oder Tinte kann jeder beliebige Farbstoff oder jede beliebige Tinte eingesetzt werden, der/die den gewünschten optischen Eindruck hervorruft. Tinten enthalten typischerweise einen oder mehrere Farbstoffe, Lösemittel, gegebenenfalls Bindemittel sowie weitere Zusatzstoffe. Als flüssige Farbstoffe oder in einer Tinte enthaltene Farbstoffe sind vorliegend auch Lumineszenzstoffe zu verstehen. Verwendbare Tinten sind beispielsweise in DE 10 2007 052 947 A1 angegeben. Daher wird der Offenbarungsgehalt dieser Anmeldung durch Bezugnahme vollumfänglich, zumindest in Bezug auf die Farbstoffe und Pigmente, in die vorliegende Anmeldung aufgenommen.

In einer weiteren bevorzugten Weiterbildung der vorliegenden Erfindung (zweite Ausführungsvariante) sind mindestens eine der ersten chemischen Substanzen durch jeweils mindestens ein Lösemittel für ein Farbmittel oder für ein das Farbmittel aufweisendes Material des Wert- oder Sicherheitsproduktes und mindestens eine der zweiten chemischen Substanzen durch mindestens ein Farbmittel gebildet. Das mindestens eine Lösemittel ist in den Kern/Hülle-Teilchen enthalten, und das mindestens eine Farbmittel, das durch die mindestens eine zweite chemische Substanz gebildet wird, befindet sich in der Umgebung der Kern/Hülle-Teilchen. Das Lösemittel kann durch eine einzige chemische Verbindung oder ein Verbindungsgemisch gebildet sein. Das Lösemittel wird bei der mechanischen Beanspruchung des Produktes freigesetzt und gelangt zu dem Farbmittel in der Umgebung der Kern/Hülle-Teilchen. Dort solvatisiert das Lösemittel das Farbmittel. Das Farbmittel kann beispielsweise in Form einer Farbschicht, insbesondere in Form einer Druckschicht, gebildet sein. Beispielsweise kann die Farbschicht ein individualisierendes oder nicht individualisierendes Sicherheitsmerkmal bilden, etwa in Form des Gesichtsbildes oder der in Klarschrift vorliegenden Daten einer Person, der das Produkt zugeordnet ist, oder eines Wappens oder anderen Symbols. Das Farbmittel kann zu einer Schicht der Kern/Hülle-Teilchen benachbart angeordnet sein. Durch die Freisetzung des Lösemittels aus den Kern/Hülle-Teilchen wird das Farbmittel in einen chemisch gelösten Zustand überführt, und/oder das Material des Wert- oder Sicherheitsproduktes, in dem sich das Farbmittel befindet, wird von dem freigesetzten Lösemittel zumindest teilweise gelöst. Dadurch kann das Farbmittel in angrenzende Materialbereiche des Wert- oder Sicherheitsproduktes diffundieren und entwickelt auf diese Weise einen optisch wahrnehmbaren Eindruck (Verfärbung), die für das menschliche Auge leicht erkennbar ist oder von einer Verifikationsvorrichtung detektiert werden kann. Durch die Solvatisierung des Farbmittels mittels des Lösemittels verläuft die ursprünglich vorhandene Merkmalsstruktur, oder die Merkmalsstruktur erfährt einen Farbumschlag oder wird entfärbt.

Für diese Vorgehensweise geeignete Lösemittel für mit PC und PET kompatible Druckfarben sind in DE 10 2007 052 947 A1 angegeben. Zumindest insoweit wird der Offenbarungsgehalt dieser Druckschrift durch Bezugnahme in die vorliegende Anmeldung aufgenommen. Darüber hinaus sind auch übliche organische Lösemittel, wie Aceton oder ein Ethylenglykolester, einsetzbar.

In einer weiteren bevorzugten Weiterbildung der vorliegenden Erfindung (dritte Ausführungsvariante) sind mindestens eine der ersten chemischen Substanzen durch jeweils einen ersten Reaktivstoff und mindestens eine der zweiten chemischen Substanzen durch jeweils einen zweiten Reaktivstoff gebildet. Der erste Reaktivstoff ist in den Kern/Hülle-Teilchen enthalten. Der zweite Reaktivstoff kann in dem Wert- oder Sicherheitsprodukt enthalten sein, ohne Bestandteil eines Kern/Hülle-Teilchens zu sein. Allerdings besteht auch die Möglichkeit, dass der zweite Reaktivstoff ebenso wie der erste Reaktivstoff in Kern/Hülle-Teilchen enthalten ist. Somit liegen in dieser zweiten Alternative erste Typen von Kern/Hülle-Teilchen mit dem ersten Reaktivstoff und zweite Typen von Kern/Hülle-Teilchen mit dem zweiten Reaktivstoff vor. Durch chemische Reaktion des mindestens einen ersten Reaktivstoffes und des mindestens einen zweiten Reaktivstoffes kann dann jeweils eine dritte chemische Substanz, insbesondere ein Farbmittel, beispielsweise ein Farbstoff, gebildet werden. Die beiden Reaktivstoffe des ersten und des zweiten Typs können beispielsweise farblos sein. Durch die chemische Reaktion des ersten Reaktivstoffes mit dem zweiten Reaktivstoff bildet sich mindestens eine dritte chemische Substanz, die eine Eigenfarbe aufweist, d.h. eine Absorption und/oder Lumineszenz im sichtbaren, IR- und/oder UV-Spektralbereich. Alternativ können die beiden Reaktivstoffe auch eine erste und gegebenenfalls zweite Farbe (Absorption und/oder Lumineszenz im sichtbaren, IR- und/oder UV-Spektralbereich) aufweisen. Durch die chemische Reaktion findet dann eine Verfärbung zu einer dritten Farbe statt, die durch den dritten Stoff hervorgerufen wird. Die dritte Farbe unterscheidet sich von den Farben des ersten und des zweiten Reaktivstoffes. Alternativ können der zweite Reaktivstoff ein Farbmittel und der erste Reaktivstoff ein chemisches Reagens sein, das mit dem Farbmittel reagiert, sodass dieses entfärbt wird. Das zweite Farbmittel kann in diesem Beispiel ein Sicherheitsmerkmal des Wert- oder Sicherheitsproduktes bilden. Der zweite Reaktivstoff befindet sich in der Umgebung der Kern/Hülle-Teilchen. Durch die Freisetzung des ersten Reaktivstoffes aus den Kern/Hülle-Teilchen gelangt dieser zu dem zweiten Reaktivstoff, sodass eine chemische Reaktion unter Bildung des dritten Stoffes stattfinden kann.

Als erster Reaktivstoff können beispielsweise eine Base, wie NaOH, und als zweiter Reaktivstoff beispielsweise Kristallviolett eingesetzt werden. Kristallviolett kann zur Bildung eines Musters in dem Wert- oder Sicherheitsprodukt verwendet sein. Im Falle der Beschädigung der Kern/Hülle-Teilchen diffundiert NaOH zu dem Muster und entfärbt den Farbstoff, sodass das Muster weitgehend oder vollständig verschwindet.

In noch einer weiteren Weiterbildung der vorliegenden Erfindung werden mindestens zwei Produktlagen bereitgestellt. Diese werden dann in einem weiteren Verfahrensschritt nach dem Aufbringen der Kern/Hülle-Teilchen auf und/oder Einbringen in mindestens eine der Produktlagen aufeinandergestapelt und durch Laminieren miteinander verbunden.

Das Produktmaterial ist vorzugsweise aus einem Polymer gebildet. Besonders bevorzugt ist das Produktmaterial durch PC, insbesondere auf Bisphenol A-Basis oder auf Basis eines geminal disubstituierten Dihydroxydiphenylcycloalkans gebildet. Alternativ kann das Produktmaterial auch durch PET oder ein anderes Produktmaterial gebildet sein.

Das Wert- oder Sicherheitsprodukt wird vorzugsweise aus einer mit den Kern/Hülle-Teilchen versehenen Polymerlage, ferner weiteren Polymerlagen, auf denen sich keine Teilchen befinden und gegebenenfalls außenseitigen Schutzlackierungen oder Schutzfolien hergestellt. Die Schutzlackierungen oder Schutzfolien dienen zum außenseitigen Schutz gegen Beschädigungen (Verkratzungen) und zum Einschließen von ansonsten außenseitig angebrachten Sicherheitsmerkmalen in das Innere des Produkts, um vor Manipulationen zu schützen. Ferner kann außenseitig auch eine diffraktive Folie angebracht werden. Unmittelbar unterhalb der Schutzlackierungen oder Schutzfolien können weitere Kern/Hülle-Teilchen angeordnet sein. Zusätzlich zu den PC- oder PET-Lagen kann das Produkt auch weitere Lagen aus anderen Materialien enthalten, beispielsweise aus anderen Polymeren oder aus Papier oder Pappe. Bevorzugt wird das Dokument aus 3 bis 12, vorzugsweise 4 bis 10 Folien, hergestellt, wobei die einzelnen Folien aus dem gleichen Material oder aus unterschiedlichen Materialien bestehen können. Typischerweise wird die Lamination von PC in einer Heiß/Kalt-Laminierpresse in einem ersten Schritt bei 170 bis 200°C und einem Druck von 50 bis 600 N/cm² und in einem zweiten Schritt bei Kühlung etwa auf Raumtemperatur und unter demselben Druck hergestellt. Die Lamination von PET findet bei einer höheren Temperatur statt, beispielsweise bei 220°C. Die Polymerfolien haben typischerweise eine Dicke von 25 bis 250 µm, vorzugsweise von 50 bis 100 µm.

Das Wert- oder Sicherheitsprodukt weist mindestens ein Sicherheitsmerkmal auf, das entweder individualisierend oder nicht individualisierend ist. Als Sicherheitsmerkmale kommen Melierfasern, Guillochen, Wasserzeichen, Prägedrucke, ein Sicherheitsfaden, Mikroschrift, Kippbilder, Hologramme, optisch variable Pigmente, lumineszierende Farben, Durchlichtpasser und dergleichen in Betracht. Ferner kann das Dokument auch elektronische Komponenten aufweisen, beispielsweise einen RFID-Schaltkreis mit Antenne und RFID-Mikrochip, elektronische Anzeigeelemente, LEDs, berührungsempfindliche Sensoren und dergleichen. Die elektronischen Komponenten können beispielsweise zwischen zwei opaken Lagen des Dokuments versteckt angeordnet sein. Die Kern/Hülle-Teilchen können in unmittelbarer Nähe zu einem oder mehreren der Sicherheitsmerkmale angeordnet werden, sodass eine Manipulation eines Sicherheitsmerkmals zwangsläufig zu einer Freisetzung der ersten chemischen Substanz aus den Kern/Hülle-Teilchen führt.

Die vorliegende Erfindung wird nachfolgend anhand von Figuren näher erläutert, wobei die dargestellten Beispiele lediglich exemplarischen Charakter haben und keine Einschränkung hinsichtlich der Tragweite der beschriebenen Erfindung haben. Es zeigen im Einzelnen:
- Fig. 1: eine schematische Ansicht eines erfindungsgemäßen Wert- oder Sicherheitsdokuments in einer isometrischen Darstellung;
- Fig. 2: eine schematische Ansicht eines erfindungsgemäßen Wert- oder Sicherheitsdokuments in einer Draufsicht mit einer eine mechanische Einwirkung anzeigenden Verfärbung;
- Fig. 3: eine schematische Ansicht eines Kern/Hülle-Teilchens vor und nach der Zerstörung durch mechanische Einwirkung in einer Querschnittsdarstellung;
- Fig. 4: eine schematische Schnittansicht durch ein erfindungsgemäßes Wert- oder Sicherheitsdokument mit einer Ausschnittsvergrößerung vor einer mechanischen Einwirkung sowie mit einer Teildarstellung einer Druckschicht nach einer mechanischen Einwirkung in einer ersten Ausführungsvariante;
- Fig. 4A: eine schematische Ansicht eines Kern/Hülle-Teilchens vor und nach der Zerstörung durch mechanische Einwirkung in einer Querschnittsdarstellung in der ersten Ausführungsvariante;
- Fig. 5: eine schematische Schnittansicht durch ein erfindungsgemäßes Wert- oder Sicherheitsdokument mit einer Ausschnittsvergrößerung vor einer mechanischen Einwirkung sowie mit einer Teildarstellung einer Druckschicht nach einer mechanischen Einwirkung in einer zweiten Ausführungsvariante;
- Fig. 5A: eine schematische Ansicht eines Kern/Hülle-Teilchens vor und nach der Zerstörung durch mechanische Einwirkung in einer Querschnittsdarstellung in der zweiten Ausführungsvariante;
- Fig. 6: eine schematische Schnittansicht durch ein erfindungsgemäßes Wert- oder Sicherheitsdokument mit einer Ausschnittsvergrößerung vor einer mechanischen Einwirkung sowie mit einer Teildarstellung einer Reaktivstoffschicht nach einer mechanischen Einwirkung in einer dritten Ausführungsvariante;
- Fig. 6A: eine schematische Ansicht eines Kern/Hülle-Teilchens vor und nach der Zerstörung durch mechanische Einwirkung in einer Querschnittsdarstellung in der dritten Ausführungsvariante;
- Fig. 7: eine schematische Schnittansicht durch ein erfindungsgemäßes Wert- oder Sicherheitsdokument mit einer Ausschnittsvergrößerung vor einer mechanischen Einwirkung (Spaltung durch Delamination) sowie mit einer Teildarstellung einer Druckschicht nach einer mechanischen Einwirkung in der ersten Ausführungsvariante;
- Fig. 8: eine Verifikationsvorrichtung für erfindungsgemäße Wert- oder Sicherheitsprodukte in einer schematischen Darstellung.

In den Figuren bezeichnen gleiche Bezugszeichen Elemente mit derselben Funktion oder dieselben Elemente.

Das erfindungsgemäße manipulationsabgesicherte Wert- oder Sicherheitsprodukt 100 kann ein Wert- oder Sicherheitsdokument oder ein Sicherheitselement sein, das beispielsweise als Aufkleber auf einen zu sichernden Artikel, beispielsweise ein Wert- oder Sicherheitsdokument, aufgebracht und mit diesem fest verbunden werden kann. Das Wert- oder Sicherheitsdokument kann ein Personaldokument, wie ein Reisepass, ein Personalausweis, ein Zugangsausweis oder dergleichen, eine Scheckkarte oder eine Banknote oder noch ein anderes Dokument, sein. Alle nachfolgenden Beispiele werden stellvertretend für andere Dokumententypen anhand einer derartigen Karte beschrieben.

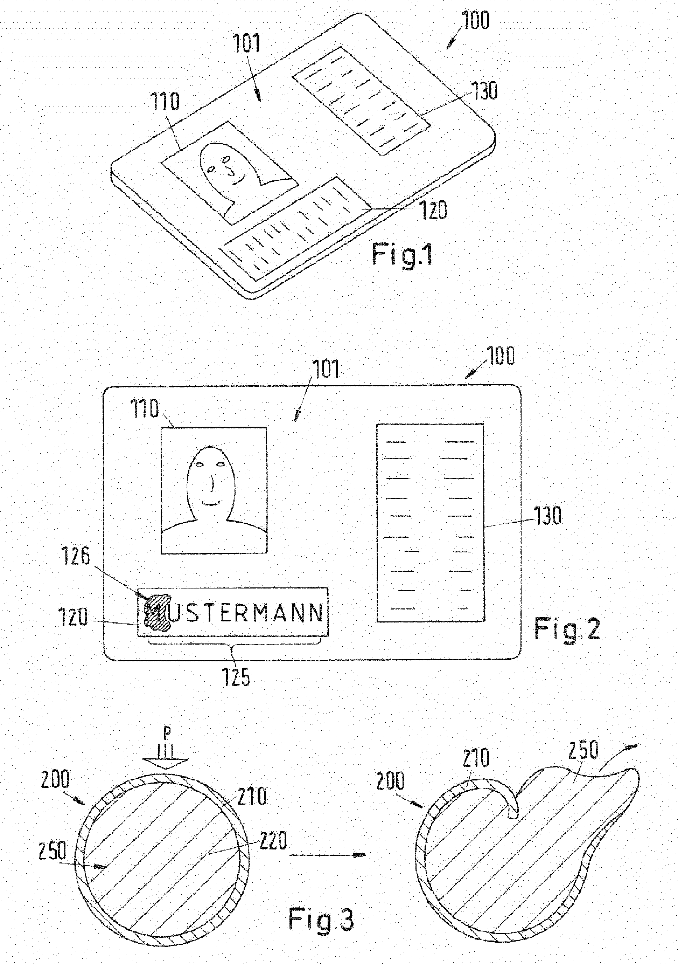

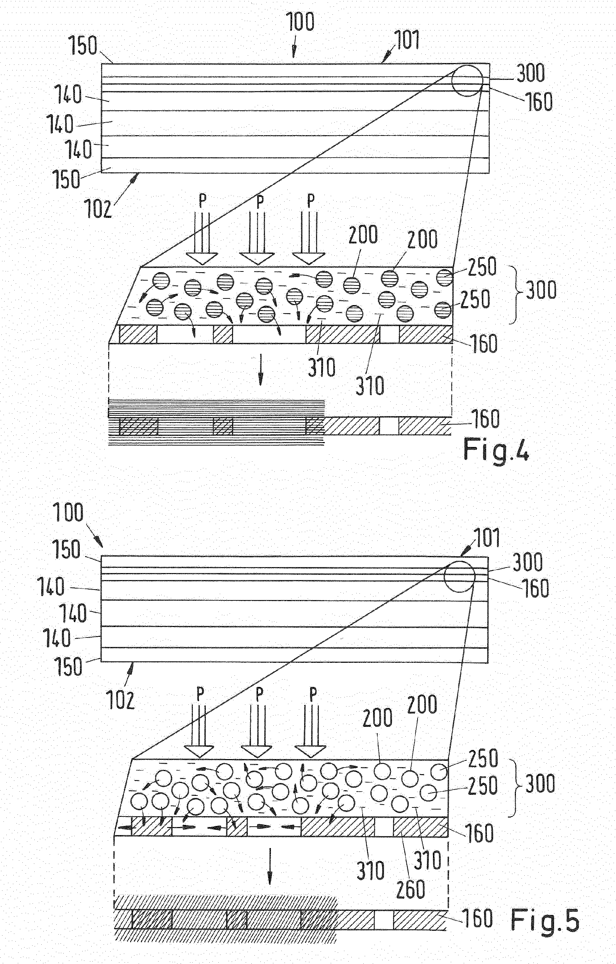

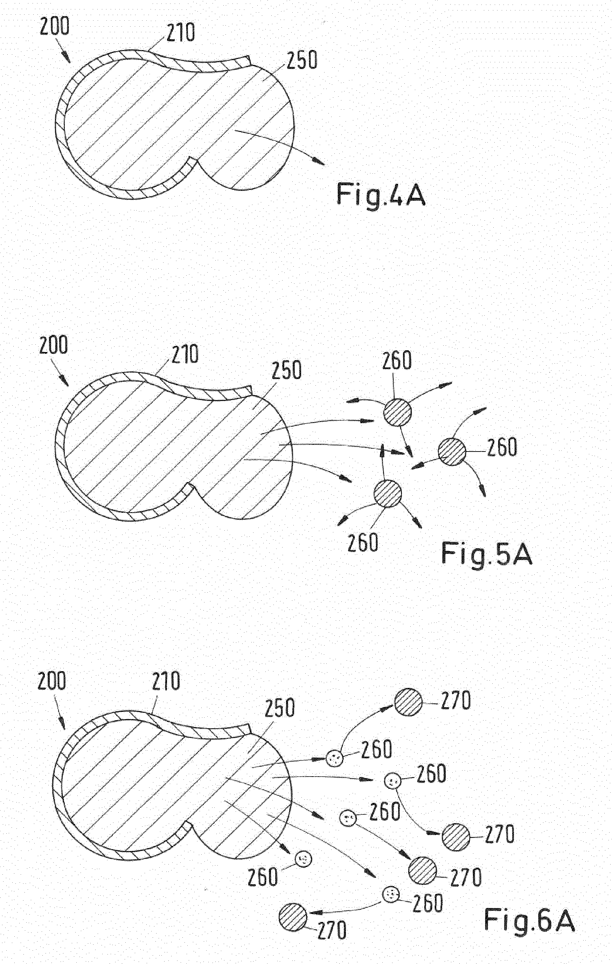

In Fig. 1 ist stellvertretend für andere derartige Produkte eine Identitätskarte 100 dargestellt, die beispielsweise als Laminat aus mehreren innenliegenden Polymerlagen 140 zusammengefügt worden ist (siehe Fig. 4, 5, 6, 7). Beispielsweise können die Polymerlagen aus PC und/oder PET bestehen. Die einzelnen Lagen können ungefüllt oder mit Füllstoffen gefüllt sein. In letzterem Falle sind sie opak, ansonsten transparent/transluzent. Die Lagen können vorzugsweise derart miteinander verbunden sein, dass sie einen monolithischen Block bilden, der nur schwierig gespalten werden kann. Die äußeren Schichten 150 der Karte können aus einem Schutzlack bestehen (Fig. 4, 5, 6, 7), der nach dem Laminieren auf die Karte aufgetragen worden ist. Der Schutzlack ist transparent, sodass darunter liegende Informationen von außen sichtbar sind. In der Karte innenliegend kann ferner beispielsweise ein RFID-Schaltkreis mit einer Antenne und mit einem mit dieser elektrisch verbundenen RFID-Chip enthalten sein (nicht dargestellt). Der Schaltkreis ist wegen weiter außen liegender opaker Polymerlagen nicht sichtbar.

Die Karte 100 weist eine Oberseite 101 und eine Unterseite (in Fig. 1 nicht dargestellt) auf. Auf der Oberseite befinden sich ein Gesichtsbild 110 des Inhabers der Karte sowie zwei Datenfelder, nämlich ein erstes Datenfeld 120 und ein zweites Datenfeld 130, mit Karten- und Inhaberdaten in Klarschrift und/oder in verschlüsselter Form. Diese sind durch entsprechende Druckschichten hergestellt, die auf einer der äußeren Lagen des Dokuments oder aber auch unmittelbar unter der außenliegenden Schutzlackschicht, liegen. Alternativ können diese Daten auch durch Laser-Engraving nachträglich im Inneren der Karte erzeugt worden sein.

Die Oberseite 101 der Karte 100 ist nochmals in einer Draufsicht in Fig. 2 gezeigt. In diesem Fall ist ferner dargestellt, welche Veränderung sich zeigt, wenn eine äußere Schutzlackschicht 150 zum Zwecke einer Manipulation der Wiedergabe 125 des Namens des Inhabers der Karte auf dem einen Datenfeld 120 beschädigt wird, beispielsweise durch lokales Abtragen: In diesem Falle hat ein Fälscher den Versuch unternommen, einen Teil der Schutzlackschicht über dem ersten Buchstaben ("M") des Inhabernamens abzuschaben. Dadurch wurde eine mechanische Einwirkung auf eine in der unmittelbaren Umgebung der den Namen wiedergebenden Druckschicht 160 angeordnete Dotierschicht 300 ausgeübt, in der sich Kern/Hülle-Teilchen 200 befinden (Fig. 4, 5, 6, 7), woraufhin die Kern/Hülle-Teilchen beschädigt oder sogar zerstört wurden und eine darin enthaltene erste chemische Substanz 250 freigesetzt wurde (Fig. 4A, 5A, 6A). Die freigesetzte erste chemische Substanz hat den mechanisch manipulierten Oberflächenbereich 126 der Karte verfärbt, sodass der ursprüngliche Buchstabe kaum noch erkennbar ist und sodass durch die Verfärbung dieses Bereiches jedenfalls ohne weiteres erkennbar ist, dass die Karte manipuliert wurde.

Ein Kern/Hülle-Teilchen 200 vor und nach einer mechanischen Einwirkung ist in Fig. 3 wiedergegeben. Das Kern/Hülle-Teilchen ist beispielsweise sphärisch und weist beispielsweise einen Durchmesser von wenigen µm, beispielsweise 5 µm, auf. Das Teilchen ist aus einer Hülle 210 und einem von der Hülle allseitig und dicht umgebenen Kern 220 umgeben, der ein Kernvolumen aufweist. In dem Kernvolumen befindet sich die erste chemische Substanz 250, beispielsweise ein Farbstoff oder eine Tinte, zum Beispiel eine wie in DE 10 2007 052 947 A1 beschriebene Tinte, die einen Farbstoff, ein chemisches Lösemittel, ein Bindemittel auf der Basis eines geminal disubstituierten Dihydroxydiphenylcycloalkans sowie weitere übliche Tintenbestandteile enthält. Die Hülle kann beispielsweise aus einem Polymer, beispielsweise einem Acrylat, oder aus einer anorganischen Verbindung, beispielsweise TiO₂, bestehen.

Durch mechanische Einwirkung, beispielsweise Erzeugung eines lokalen Druckes P oder durch Aussetzen des Teilchens 200 einem Scherfeld, wird die Hülle 210 beschädigt oder vollständig zerstört. Dadurch wird die in dem Kernvolumen enthaltene erste chemische Substanz 250 freigesetzt, die daraufhin austritt. Falls die erste chemische Substanz ein Farbstoff ist, gelangt dieser auf diese Weise in das umgebende Material der Karte 100 und verfärbt das Kartenmaterial.

Die Kern/Hülle-Teilchen 200 können beispielsweise in Form einer Druckfarbe in einem Dispergiermittel 310 dispergiert werden, sodass die die Teilchen enthaltende Dispersion zum Beispiel mittels eines Druckverfahrens auf eine Polymerlage 140 oder auf eine Oberfläche 101 der Karte 100 aufgetragen werden und dort eine Dotierschicht 300 bilden . Die Dispersion kann vollflächig oder in Form eines Musters aufgetragen werden.

In Fig. 4 ist ein Ausschnitt aus einer erfindungsgemäßen Karte 100 beispielhaft gezeigt, wobei die Darstellung eine erste Ausführungsvariante der Karte zeigt. Die Karte weist zumindest mehrere innenliegende Polymerlagen 140, beispielsweise aus PC, und an jeder Außenseite eine Schutzlackschicht 150 auf. Unmittelbar unterhalb der oberen Schutzlackschicht befindet sich eine Dotierschicht 300, die mit der Dispersion der Kern/Hülle-Teilchen 200 in einem Dispergiermittel 310 gebildet ist, und unter der Dotierschicht eine Druckschicht 160, die eine Information 125, beispielsweise den Namen des Karteninhabers, wiedergibt (Fig. 2). Das Dispergiermittel kann beispielsweise ein Bindemittel aus einem PC-Derivat sein. Die Druckschicht ist in herkömmlicher Art und Weise mit einer Druckfarbe auf einer der Polymerlagen hergestellt. Die Kern/Hülle-Teilchen enthalten in dieser ersten Ausführungsvariante einen Farbstoff oder eine Tinte als erste chemische Substanz 250 im Kern 220 der Teilchen. Die Hülle 210 kann beispielsweise aus TiO₂ bestehen.

Im oberen Teil des vergrößerten Ausschnittes von Fig. 4 sind die Kern/Hülle-Teilchen 200 in der Dotierschicht 300 in unbeschädigtem Zustand erkennbar. Durch eine mechanische Einwirkung, beispielsweise durch das Erzeugen eines Druckes P auf die Dotierschicht werden die Kern/Hülle-Teilchen, wie in Fig. 4A gezeigt, beschädigt oder zerstört, sodass der Farbstoff oder die Tinte aus den Teilchen freigesetzt wird und aus diesen austritt. Der Farbstoff oder die Tinte diffundiert dann in die darunter liegende Druckschicht 160. Beispielsweise kann die Druckschicht mit einer blauen Farbe erzeugt worden sein. Wenn der Farbstoff oder die Tinte in den Kern/Hülle-Teilchen beispielsweise schwarz ist, überdeckt dieser/diese die Druckschicht in dem Bereich, in dem die Teilchen diese Substanz freisetzen. Dies ist im unteren Teil des Ausschnittes von Fig. 4 schematisch wiedergegeben.

In Fig. 4A ist hierzu schematisch gezeigt, dass der Farbstoff oder die Tinte 250, der/die den Inhalt der Kern/Hülle-Teilchen 200 gebildet hat, durch die mechanische Einwirkung austritt und das umgebende Kartenmaterial verfärbt.

In Fig. 5 ist ebenfalls ein Ausschnitt aus einer erfindungsgemäßen Karte 100 beispielhaft gezeigt, wobei die Darstellung eine zweite Ausführungsvariante der Karte wiedergibt. Die Karte weist wiederum zumindest mehrere innenliegende Polymerlagen 140, beispielsweise aus PC, und an jeder Seite eine Schutzlackschicht 150 auf. Unmittelbar unterhalb der oberen Schutzlackschicht befindet sich wieder eine Dotierschicht 300, die mit der Dispersion der Kern/Hülle-Teilchen 200 in einem Dispergiermittel 310 gebildet ist, und unter der Dotierschicht eine Druckschicht 160, die eine Information 125, beispielsweise den Namen des Karteninhabers, wiedergibt (Fig. 2). Das Dispergiermittel kann beispielsweise ein Bindemittel aus einem PC-Derivat sein. Die Druckschicht ist in herkömmlicher Art und Weise mit einer Druckfarbe auf einer der Polymerlagen hergestellt. Die Kern/Hülle-Teilchen enthalten in dieser zweiten Ausführungsvariante ein Lösemittel als erste chemische Substanz 250 im Kern 220 der Teilchen, das ein Lösemittel für die Tinte ist, mit der die darunter angeordnete Druckschicht gebildet worden ist. Beispielsweise kann das Lösemittel Aceton sein. Die Hülle 210 kann beispielsweise aus TiO₂ bestehen.

Im oberen Teil des vergrößerten Ausschnittes von Fig. 5 sind wiederum die Kern/Hülle-Teilchen 200 in der Dotierschicht 300 in unbeschädigtem Zustand erkennbar. Durch eine mechanische Einwirkung, beispielsweise durch das Erzeugen eines Druckes P auf die Dotierschicht werden die Kern/Hülle-Teilchen, wie in Fig. 5A gezeigt, beschädigt oder zerstört, sodass das Lösemittel 250 aus den Teilchen freigesetzt wird und aus diesen austritt. Das Lösemittel diffundiert dann in die darunter liegende Druckschicht 160 und löst die darin enthaltene Tinte, die die zweite chemische Substanz 260 bildet, auf oder zumindest an. Dadurch verwischen die Konturen des mit der Tinte gebildeten Musters 125 der Druckschicht. Dies ist im unteren Teil des vergrößerten Ausschnittes von Fig. 5 schematisch wiedergegeben, wo dargestellt ist, dass die Tinte der Druckschicht über den gesamten von der mechanischen Einwirkung erfassten Bereich in der Umgebung der Druckschicht verwischt ist.

In Fig. 5A ist hierzu schematisch gezeigt, dass das Lösemittel 250, das den Inhalt der Kern/Hülle-Teilchen 200 gebildet hat, durch die mechanische Einwirkung austritt und in der Umgebung des Kern/Hülle-Teilchen angeordnete Farbstoffe 260 an- oder auflöst, sodass das gesamte angrenzende Material der Karte 100 verfärbt oder entfärbt wird.

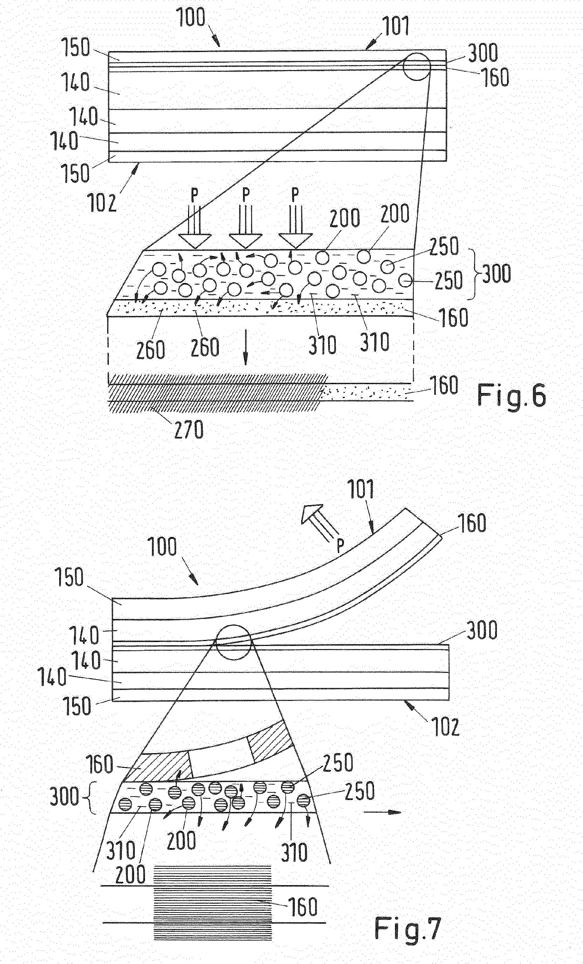

Auch in Fig. 6 ist ein Ausschnitt aus einer erfindungsgemäßen Karte 100 beispielhaft gezeigt, wobei die Darstellung eine dritte Ausführungsvariante der Karte zeigt. Die Karte weist wiederum zumindest mehrere innenliegende Polymerlagen 140, beispielsweise aus PC, und an jeder Seite eine Schutzlackschicht 150 auf. Unmittelbar unterhalb der oberen Schutzlackschicht befindet sich wieder eine Dotierschicht 300, die mit der Dispersion der Kern/Hülle-Teilchen 200 in einem Dispergiermittel 310 gebildet ist. Das Dispergiermittel kann beispielsweise ein Bindemittel aus einem PC-Derivat sein. Die Kern/Hülle-Teilchen enthalten in dieser dritten Ausführungsvariante einen ersten Reaktivstoff für die Tinte als erste chemische Substanz 250, beispielsweise NaOH, der im Kern 220 der Teilchen enthalten ist. Die Hülle 210 kann beispielsweise aus TiO₂ bestehen. Unter der Dotierschicht ist in diesem Falle eine Schicht 160 aus einem zweiten Reaktivstoff 260, beispielsweise aus dem Farbstoff Kristallviolett, angeordnet. Dieser ist in diesem Beispiel in der Schicht vollflächig appliziert worden. Die beiden Reaktivstoffe gehen eine chemische Reaktion miteinander ein, wenn sie aufeinander treffen, wobei sie ein im sichtbaren Spektralbereich nicht farbiges Reaktionsprodukt, im vorliegenden Beispiel das entfärbte Kristallviolett, bilden.

Im oberen Teil des vergrößerten Ausschnittes von Fig. 6 sind wiederum die Kern/Hülle-Teilchen 200 in der Dotierschicht 300 in unbeschädigtem Zustand erkennbar. Durch eine mechanische Einwirkung, beispielsweise durch das Erzeugen eines Druckes P auf die Dotierschicht werden die Kern/Hülle-Teilchen, wie in Fig. 6A gezeigt, beschädigt oder zerstört, sodass der erste Reaktivstoff 250 aus den Teilchen freigesetzt wird und aus diesen austritt. Der erste Reaktivstoff diffundiert dann in die darunter liegende Schicht 160 des zweiten Reaktivstoffes 260. Daraufhin reagieren die beiden Stoffe miteinander und bilden den dritten Stoff 270. Dadurch entsteht eine Ver- oder Entfärbung im Material der Karte 100 an der Stelle, an der die mechanische Einwirkung stattgefunden hat. Dies ist im unteren Teil des vergrößerten Ausschnittes von Fig. 6 schematisch wiedergegeben, wo dargestellt ist, dass der dritte Stoff 270 im gesamten von der mechanischen Einwirkung erfassten Bereich erzeugt worden ist. Im vorliegenden Fall ist die dritte chemische Substanz im sichtbaren Spektralbereich nicht gefärbt.

In Fig. 6A ist hierzu schematisch gezeigt, dass der erste Reaktivstoff 250, der den Inhalt der Kern/Hülle-Teilchen 200 gebildet hat, durch die mechanische Einwirkung austritt und in die Umgebung des Kern/Hülle-Teilchens gelangt, wo sich der zweite Reaktivstoff 260 befindet. Durch die chemische Reaktion der beiden Reaktivstoffe wird der dritte Stoff 270 erzeugt, der die Entfärbung des Kartenmaterials bildet.

In Fig. 7 ist ein weiteres Ausführungsbeispiel gezeigt, bei dem durch eine Manipulation einer Karte 100 eine Verfärbung erzeugt wird, die die Manipulation dauerhaft anzeigt. In diesem Falle wird die Karte zum Zwecke der Verfälschung teilweise gespalten (delaminiert), wobei eine Kraft P aufgewendet wird, um innenliegende Informationen 125 (Fig. 2) einer Druckschicht 160 verändern zu können.

Fig. 7 zeigt wiederum einen Ausschnitt aus einer mehrere innenliegende Polymerlagen 140, beispielsweise aus PC, aufweisende Karte 100, die ferner außenliegende Schutzlackschichten 150 aufweist. Zwischen zwei innenliegenden Polymerlagen befindet sich eine Druckschicht 160, die durch die Delamination zugänglich gemacht werden soll. Die Druckschicht ist in herkömmlicher Art und Weise mit einer Druckfarbe hergestellt. Unmittelbar benachbart zu der Druckschicht befindet sich innenliegend eine Dotierschicht 300 mit in einem Dispergiermittel 310, beispielsweise einem PC-Derivat, dispergierten Kern/Hülle-Teilchen 200. Die Kern/Hülle-Teilchen weisen wie im Falle der ersten Ausführungsvariante gemäß Fig. 4, 4A eine Hülle aus TiO₂ auf, der einen Kern 220 umschließt, der einen Farbstoff oder eine Tinte 250 enthält.

Durch die Delamination der Karte 100 entstehen im Bereich der Spaltung mechanische Spannungen, durch die die Kern/Hülle-Teilchen 200 im Bereich der Spaltung beschädigt oder zerstört werden. Dadurch tritt wiederum der Farbstoff oder die Tinte 250 aus, sodass dieser/diese die benachbarte Druckschicht 160 überdeckt.

Die in den vorstehend beschriebenen Ausführungsformen erzeugten lokalen Ver- oder Entfärbungen der Karte 100 können beispielsweise für ein menschliches Auge sichtbar sein. In diesem Falle ist es sehr einfach, die Prüfung auf eine Manipulation durch eine Person durchführen zu lassen. Hierzu können die die Verfärbung hervorrufenden Substanzen im sichtbaren Spektralbereich elektromagnetische Strahlung absorbieren, oder sie können im sichtbaren Spektralbereich lumineszieren.

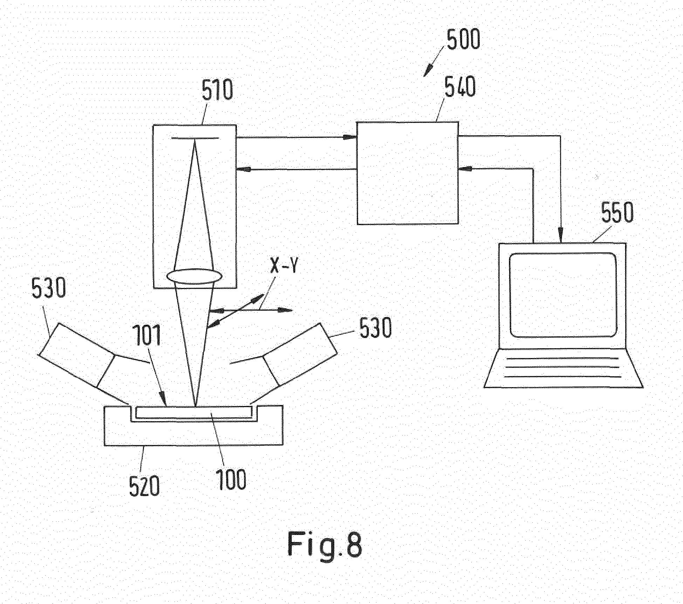

Falls die Verfärbung ausschließlich außerhalb des sichtbaren Spektralbereiches detektierbar ist, muss für die Erfassung der Manipulation eine Verifikationsvorrichtung 500 eingesetzt werden. In Fig. 8 ist eine derartige Vorrichtung schematisch dargestellt. Die Vorrichtung weist eine Strahlungsabsorbereinrichtung 510, beispielsweise ein CCD-Array mit einer geeigneten Optik, und eine Halterung 520 für die Karte 100 auf. Ferner sind Beleuchtungseinrichtungen 530 vorgesehen, mit denen die zur Strahlungsabsorbereinrichtung gewandte Oberfläche 101 der Karte beleuchtet wird. Die Strahlungsabsorbereinrichtung kann die Kartenoberfläche beispielsweise lokal aufgelöst abscannen, sodass von unterschiedlichen Oberflächenbereichen Informationen über Verfärbungen erfasst werden können. Hierzu kann die Optik in einer Ebene parallel zur Kartenoberfläche verfahrbar sein (X-Y). Die Strahlungsabsorbereinrichtung ist vorzugsweise für Strahlung im IR- und/oder UV-Spektralbereich empfindlich. Ferner kann auch vorgesehen sein, dass die von der Kartenoberfläche emittierte Strahlung spektral aufgelöst erfasst wird. Zur Ansteuerung der Strahlungsabsorbereinrichtung dienen eine Steuer- und Erfassungseinrichtung 540 sowie eine Datenverarbeitungseinrichtung 550.

Zur Durchführung der Verifikation wird die Karte 100 in der Halterung 520 der Verifikationsvorrichtung 500 platziert. Anschließend wird die Oberfläche 101 der Karte von der Strahlungsabsorbereinrichtung 510 gescannt, wobei Signale erfasst werden. Die erfassten Signale werden an die Steuer- und Erfassungseinrichtung 540 und von dieser zu der Datenverarbeitungseinrichtung 550 weitergeleitet. Mit der Datenverarbeitungseinrichtung wird dann eine Abweichung der optischen Eigenschaften der Oberfläche oder eines Bereiches der Oberfläche der Karte von Referenzeigenschaften dieser Oberfläche oder diesem Bereich der Oberfläche erfasst. Eine festgestellte Abweichung indiziert, dass die Karte manipuliert ist. Die Referenzeigenschaften sind optische Eigenschaften, die zuvor von einer nicht manipulierten Karte erfasst worden sind.

### Bezugszeichenliste:

- 100: Wert- oder Sicherheitsprodukt, Wert- oder Sicherheitsdokument, Karte
- 101: Kartenoberseite
- 102: Kartenunterseite
- 110: Gesichtsbild
- 120: erstes Datenfeld
- 125: Wiedergabe des Namens des Inhabers der Karte, Information, Muster
- 126: mechanisch manipulierter Oberflächenbereich
- 130: zweites Datenfeld
- 140: innenliegende Polymerlagen
- 150: außenliegende Schutzlackschichten
- 160: Druckschicht, Schicht
- 200: Kern/Hülle-Teilchen
- 210: Hülle
- 220: Kern
- 250: erste chemische Substanz, Farbstoff, Tinte, Lösemittel, erster Reaktivstoff
- 260: zweite chemische Substanz, Farbstoff in der Druckschicht, zweiter Reaktivstoff
- 270: dritte chemische Substanz, durch Reaktion entstandener dritter Stoff, Farbmittel
- 300: Dotierschicht
- 310: Dispergiermittel
- 500: Verifikationsvorrichtung
- 510: Strahlungsabsorbereinrichtung
- 520: Kartenhalterung
- 530: Beleuchtungseinrichtungen
- 540: Steuer- und Erfassungseinrichtung
- 550: Datenverarbeitungseinrichtung
- P: mechanische Einwirkung (Druck, mechanische Spannung)
- X-Y: Verfahrbarkeit der Optik der Strahlungsabsorbereinrichtung

## Patentansprüche

1. Manipulationsabgesichertes Wert- oder Sicherheitsprodukt (100), enthaltend Kern/Hülle-Teilchen (200), deren Hülle (210) durch mechanische Einwirkung beschädigbar oder zerstörbar ist, sodass mindestens eine in den Kern/Hülle-Teilchen (200) enthaltene erste chemische Substanz (250) aus den Kern/Hülle-Teilchen (200) freigesetzt wird, wobei die erste chemische Substanz (250) allein und/oder infolge einer chemischen Wechselwirkung mit mindestens einer sich in der Umgebung der Kern/Hülle-Teilchen (200) befindenden zweiten chemischen Substanz (260) einen optisch wahrnehmbaren Eindruck hervorruft, **dadurch gekennzeichnet, dass** sich die Kern/Hülle-Teilchen (200) im Bereich eines in Form eines Musters ausgebildeten Sicherheitsmerkmals befinden, sodass das Sicherheitsmerkmal mit einem von den Kern/Hülle-Teilchen gebildeten Muster oder einem Flächenbereich, in dem die Kern/Hülle-Teilchen angeordnet sind, überlappt.

2. Manipulationsabgesichertes Wert- oder Sicherheitsprodukt (100) nach Anspruch 1, **dadurch gekennzeichnet, dass** sich die mindestens eine erste chemische Substanz (250) im Kern (220) der Kern/Hülle-Teilchen (200) befindet.

3. Manipulationsabgesichertes Wert- oder Sicherheitsprodukt (100) nach einem der vorstehenden Ansprüche, **dadurch gekennzeichnet, dass** mindestens eine der mindestens einen ersten chemischen Substanz (250) durch jeweils ein Farbmittel gebildet ist.

4. Manipulationsabgesichertes Wert- oder Sicherheitsprodukt (100) nach einem der vorstehenden Ansprüche, **dadurch gekennzeichnet, dass** mindestens eine der mindestens einen ersten chemischen Substanz (250) durch jeweils ein Lösemittel für ein Farbmittel oder für ein das Farbmittel aufweisendes Material des Wert- oder Sicherheitsproduktes (100) und mindestens eine der mindestens einen zweiten chemischen Substanz (260) durch mindestens ein Farbmittel gebildet sind.

5. Manipulationsabgesichertes Wert- oder Sicherheitsprodukt (100) nach einem der vorstehenden Ansprüche, **dadurch gekennzeichnet, dass** mindestens eine der mindestens einen ersten chemischen Substanz (250) durch jeweils einen ersten Reaktivstoff und mindestens eine der mindestens einen zweiten chemischen Substanz (260) durch jeweils einen zweiten Reaktivstoff gebildet sind und dass durch chemische Reaktion des mindestens einen ersten Reaktivstoffes (250) und des mindestens einen zweiten Reaktivstoffes (260) miteinander jeweils eine dritte chemische Substanz (270) bildbar ist.

6. Manipulationsabgesichertes Wert- oder Sicherheitsprodukt (100) nach einem der vorstehenden Ansprüche, **dadurch gekennzeichnet, dass** die Kern/Hülle-Teilchen (200) als disperse Phase in einem Dispergiermittel (310) enthalten sind, sodass das Dispergiermittel (310) und die Kern/Hülle-Teilchen (200) eine Dispersion bilden, und dass die Dispersion auf das Wert- oder Sicherheitsprodukt (100) aufgebracht und/oder in das Wert- oder Sicherheitsprodukt eingebracht sind.

7. Manipulationsabgesichertes Wert- oder Sicherheitsprodukt (100) nach einem der vorstehenden Ansprüche, **dadurch gekennzeichnet, dass** sich die Kern/Hülle-Teilchen (200) an der Oberfläche (101) und/oder unter einer Schutzlackschicht (150) des Wert- oder Sicherheitsproduktes (100) befinden.

8. Manipulationsabgesichertes Wert- oder Sicherheitsprodukt (100) nach einem der vorstehenden Ansprüche, **dadurch gekennzeichnet, dass** das Wert- oder Sicherheitsprodukt (100) durch Lamination von mindestens zwei Produktlagen (140) gebildet ist und dass sich die Kern/Hülle-Teilchen (200) im Bereich mindestens einer Kontaktebene zwischen zwei aneinander angrenzenden Produktlagen (140) und/oder innerhalb mindestens einer Produktlage (140) befinden.

9. Manipulationsabgesichertes Wert- oder Sicherheitsprodukt (100) nach Anspruch 8, **dadurch gekennzeichnet, dass** die Kern/Hülle-Teilchen (200) als disperse Phase in einem Dispergiermittel (310) für ein Druckmittel enthalten sind und dass das Druckmittel auf das Wert- oder Sicherheitsprodukt (100) und/oder auf mindestens eine Produktlage (140) gedruckt ist.

10. Verfahren zum Verifizieren der Echtheit eines manipulationsabgesicherten Wert- oder Sicherheitsproduktes (100), umfassend die folgenden Verfahrensschritte:
(a) Bereitstellen einer Verifikationsvorrichtung (500), die dazu ausgebildet ist, elektromagnetische Strahlung zu detektieren;
(b) Platzieren des manipulationsabgesicherten Wert- oder Sicherheitsproduktes (100) gemäß einem der Ansprüche 1 bis 9 in der Verifikationsvorrichtung (500); und
(c) Erfassen einer Abweichung von optischen Eigenschaften einer Oberfläche (101) oder eines Bereiches der Oberfläche (101) des manipulationsabgesicherten Wert- oder Sicherheitsproduktes (100) von Referenzeigenschaften der Oberfläche (101) oder des Bereiches der Oberfläche (101), wobei eine Abweichung indiziert, dass das manipulationsabgesicherte Wert- oder Sicherheitsprodukt (100) manipuliert ist.

## Claims

1. Manipulation-safe valuable or security product (100), containing core/shell particles (200), of which the shell (210) can be damaged or destroyed by mechanical action, such that at least one first chemical substance (250) that is contained in the core/shell particles (200) is released from the core/shell particles (200), wherein the first chemical substance (250) creates, alone and/or owing to a chemical interaction with at least one second chemical substance (260) situated in the surroundings of the core/shell particles (200), a visible impression, **characterised in that** the core/shell particles (200) are located in the region of a security feature configured in the form of a pattern, such that the security feature overlaps with a pattern formed by the core/shell particles, or with a surface region in which the core/shell particles are arranged.

2. Manipulation-safe valuable or security product (100) according to claim 1, **characterised in that** the at least one first chemical substance (250) is located in the core (220) of the core/shell particles (200).

3. Manipulation-safe valuable or security product (100) according to any one of the preceding claims, **characterised in that** at least one of the at least one first chemical substance(s) (250) is formed in each case by a colouring agent.

4. Manipulation-safe valuable or security product (100) according to any one of the preceding claims, **characterised in that** at least one of the at least one first chemical substance(s) (250) is formed in each case by a solvent for a colouring agent or for a material of the value or security product (100), comprising a colouring agent, and at least one of the at least one second chemical substance(s) (260) is formed by at least one colouring agent.

5. Manipulation-safe valuable or security product (100) according to any one of the preceding claims, **characterised in that** at least one of the at least one first chemical substance(s) (250) is formed in each case by a first reactive substance, and at least one of the at least one second chemical substance(s) (260) is formed in each case by a second reactive substance (250), and that, by chemical reaction of the at least one first reactive substance and of the at least one second reactive substance (260) with one another, in each case a third chemical substance (270) can be formed.

6. Manipulation-safe valuable or security product (100) according to any one of the preceding claims, **characterised in that** the core/shell particles (200) are contained as a dispersing phase in a dispersing agent (310), such that the dispersing agent (310) and the core/shell particles (200) form a dispersion, and that the dispersion is applied onto the valuable or security product (100) and/or is introduced into the valuable or security product.

7. Manipulation-safe valuable or security product (100) according to any one of the preceding claims, **characterised in that** the core/shell particles (200) are located on the surface (101) and/or under a protective lacquer layer (150) of the valuable or security product (100).

8. Manipulation-safe valuable or security product (100) according to any one of the preceding claims, **characterised in that** the valuable or security product (100) is formed by lamination of at least two product layers (140), and that the core/shell particles (200) are situated in the region of at least one contact plane between two adjacent product layers (140) and/or are situated inside at least one product layer (140).

9. Manipulation-safe valuable or security product (100) according to claim 8, **characterised in that** the core/shell particles (200) are contained as a dispersing phase in a dispersing agent (310) for a printing medium, and that the printing medium is printed onto the value or security product (100) and/or onto at least one product layer (140).

10. Method for verifying the authenticity of a manipulation-safe valuable or security product (100), comprising the following method steps:
(a) Provision of a verification device (500), which is configured such as to detect electromagnetic radiation;
(b) placing the manipulation-safe valuable or security product (100) according to any one of claims 1 to 9 in the verification device (500); and
(c) detection of any deviation in the optical properties of a surface (101) or of a region of the surface (101) of the manipulation-safe valuable or security product (100) from reference properties of the surface (101) or of the region of the surface (101),
wherein a deviation indicates that the manipulation-safe value or security product (100).

## Revendications

1. Produit de valeur ou de sécurité protégé contre des manipulations frauduleuses (100), contenant des particules de type noyau/enveloppe (200), dont l'enveloppe (210) peut être détériorée ou détruite par une action mécanique de sorte qu'au moins une première substance chimique (250) contenue dans les particules de type noyau/enveloppe (200) est libérée des particules de type noyau/enveloppe (200), dans lequel la première substance chimique (250) provoque seule et/ou suite à une interaction chimique avec au moins une deuxième substance chimique (260) se trouvant dans l'environnement des particules de type noyau/enveloppe (200) une impression optiquement perceptible, **caractérisé en ce que** les particules de type noyau/enveloppe (200) se trouvent dans la zone d'une caractéristique de sécurité conçue sous forme d'un motif de sorte que la caractéristique de sécurité se recouvre avec un motif formé par les particules de type noyau/enveloppe ou avec une zone en surface, dans lequel ou laquelle les particules de type noyau/enveloppe sont disposées.

2. Produit de valeur ou de sécurité protégé contre des manipulations frauduleuses (100) selon la revendication 1, **caractérisé en ce que** l'au moins une première substance chimique (250) se trouve dans le noyau (220) des particules de type noyau/enveloppe (200).

3. Produit de valeur ou de sécurité protégé contre des manipulations frauduleuses (100) selon l'une quelconque des revendications précédentes, **caractérisé en ce qu'**au moins une de l'au moins une première substance chimique (250) est formée par respectivement une matière colorante.

4. Produit de valeur ou de sécurité protégé contre des manipulations frauduleuses (100) selon l'une quelconque des revendications précédentes, **caractérisé en ce qu'**au moins une de l'au moins une première substance chimique (250) est formée par respectivement un agent solvant pour une matière colorante ou pour un matériau du produit de valeur ou de sécurité (100) comprenant la matière colorante et au moins une de l'au moins une deuxième substance chimique (260) est formée par au moins une matière colorante.

5. Produit de valeur ou de sécurité protégé contre des manipulations frauduleuses (100) selon l'une quelconque des revendications précédentes, **caractérisé en ce qu'**au moins une de l'au moins une première substance chimique (250) est formée par respectivement une première matière réactive et au moins une de l'au moins une deuxième substance chimique (260) est formée par une seconde matière réactive et **en ce que**, par réaction chimique entre elles de l'au moins une première matière réactive (250) et de l'au moins une seconde matière réactive (260) peut être formée respectivement une troisième substance chimique (270).

6. Produit de valeur ou de sécurité protégé contre des manipulations frauduleuses (100) selon l'une quelconque des revendications précédentes, **caractérisé en ce que** les particules de type noyau/enveloppe (200) sont contenues en tant que phase dispersée dans un agent dispersant (310) de sorte que l'agent dispersant (310) et les particules de type noyau/enveloppe (200) forment une dispersion et **en ce que** la dispersion est appliquée sur le produit de valeur ou de sécurité (100) et/ou introduite dans le produit de valeur ou de sécurité.

7. Produit de valeur ou de sécurité protégé contre des manipulations frauduleuses (100) selon l'une quelconque des revendications précédentes, **caractérisé en ce que** les particules de type noyau/enveloppe (200) se trouvent à la surface (101) et/ou sous une couche de laque de protection (150) du produit de valeur ou de sécurité (100) .

8. Produit de valeur ou de sécurité protégé contre des manipulations frauduleuses (100) selon l'une quelconque des revendications précédentes, **caractérisé en ce que** le produit de valeur ou de sécurité (100) est formé par stratification d'au moins deux couches de produit (140) et **en ce que** les particules de type noyau/enveloppe (200) se trouvent dans la zone d'au moins un plan de contact entre deux couches de produit contiguës (140) et/ou à l'intérieur d'au moins une couche de produit (140).

9. Produit de valeur ou de sécurité protégé contre des manipulations frauduleuses (100) selon la revendication 8, **caractérisé en ce que** les particules de type noyau/enveloppe (200) sont contenues en tant que phase dispersée dans un agent dispersant (310) pour un moyen d'impression et **en ce que** le moyen d'impression est imprimé sur le produit de valeur ou de sécurité (100) et/ou sur au moins une couche de produit (140).

10. Procédé de vérification de l'authenticité d'un produit de valeur ou de sécurité protégé contre des manipulations frauduleuses (100), comportant les étapes de procédé suivantes :
(a) l'utilisation d'un dispositif de vérification (500) qui est conçu pour détecter un rayonnement électromagnétique ;
(b) le placement du produit de valeur ou de sécurité protégé contre des manipulations frauduleuses (100) selon l'une quelconque des revendications 1 à 9 dans le dispositif de vérification (500) ; et
(c) la détection d'une divergence entre des propriétés optiques d'une surface (101) ou d'une zone de la surface (101) du produit de valeur ou de sécurité protégé contre des manipulations frauduleuses (100) et des propriétés de référence de la surface (101) ou de la zone de la surface (101), dans lequel une divergence indique que le produit de valeur ou de sécurité protégé contre des manipulations frauduleuses (100) est manipulé.
